# EUROPEAN PATENT APPLICATION

(11) **EP 4 600 611 A1**
(43) Date of publication of application: **13.08.2025**
(21) Application number: 24220138.2
(22) Date of filing: 16.12.2024
(51) Int. Cl.: G01C 21/34, B60L 53/80, G01C 21/36

(54) **NAVIGATION SYSTEM AND VEHICLE INCLUDING NAVIGATION SYSTEM**

(30) Priority: 06.02.2024 JP 2024016223
(71) Applicant: TOYOTA JIDOSHA KABUSHIKI KAISHA, Aichi-ken, 471-8571 (JP)
(72) Inventor: ICHIKAWA, Shinji, Toyota-shi, 471-8571 (JP)
(74) Representative: J A Kemp LLP

(57) **Abstract**

A navigation system (500) configured to guide a vehicle including an energy storage device which is attachable and detachable is provided. The navigation system (500) includes a guiding device (510, 520, 530) configured to present information for guiding the vehicle to at least one of a replacement site and a supply site. The replacement site is a site where the energy storage device is replaced. The supply site is a site where an energy supply facility is provided, the energy supply facility supplying energy to the energy storage device. The guiding device (510, 520, 530) is configured to guide the vehicle to the supply site when a predetermined condition is met, and to not guide the vehicle to the supply site when the predetermined condition is not met.

## Description

### BACKGROUND OF THE INVENTION

### 1. Field of the Invention

The present disclosure relates to a navigation system and a vehicle including the navigation system.

### 2. Description of Related Art

Japanese Unexamined Patent Application Publication No. 2021-009108 discloses a technology of guiding a vehicle including a battery to a charging station that can charge the battery. In the technology, the battery mounted on the vehicle functions as an energy storage device. The charging station functions as an energy supply facility that supplies energy (electricity) to the battery.

### SUMMARY OF THE INVENTION

In recent years, the practical use of a vehicle including a replaceable energy storage device has been promoted. In such a vehicle, energy retained by the vehicle can be increased by replacing an energy storage device mounted on the vehicle with another energy storage device storing a larger amount of energy than that of the currently mounted energy storage device. Moreover, such a vehicle may receive an energy supply from an energy supply facility. Accordingly, at the time of resupplying the vehicle with energy, it may be possible to enhance user convenience by guiding the vehicle not only to a replacement site where the energy storage device is replaced, but also to a supply site where an energy supply facility is provided. However, at the time of resupplying the vehicle with energy, guiding the vehicle to a supply site does not always result in enhancing user convenience. For example, the vehicle may be unequipped with equipment for allowing an energy supply from an energy supply facility to the energy storage device. Wait time to use an energy supply facility may be long because all energy supply facilities existing around the vehicle have many users. A long time may be required for the energy storage device to be supplied with sufficient energy because all energy supply facilities existing around the vehicle have low performance. In such cases, guiding the vehicle to a supply site may result in rather degrading user convenience. As described above, there is still room for improvement in the technology of guiding a vehicle including an energy storage device.

The present disclosure provides a navigation system, as well as a vehicle including the navigation system, that can enhance the convenience of a user of the vehicle including an energy storage device that is attachable and detachable by a replacement apparatus.

A first aspect of the present disclosure relates to a navigation system including a guiding device.

The navigation system in the first aspect of the present disclosure is configured to guide a vehicle including an energy storage device which is attachable and detachable. The navigation system includes a guiding device configured to present information for guiding the vehicle to at least one of a replacement site and a supply site. The replacement site is a site where the energy storage device is replaced. The supply site is a site where an energy supply facility is provided, the energy supply facility supplying energy to the energy storage device. The guiding device is configured to guide the vehicle to the supply site when a predetermined condition is met, and to not guide the vehicle to the supply site when the predetermined condition is not met.

According to the navigation system in the first aspect, the vehicle is guided to the supply site only when the predetermined condition (hereinafter, also referred to as "condition for guiding") is met. The condition for guiding is configured to not be met when it is predicted that user convenience will be degraded if the vehicle is guided to the supply site, whereby the degradation of user convenience can be restrained. Moreover, the vehicle is guided to the supply site when the condition for guiding is met, whereby user convenience can be enhanced.

Note that the energy storage device may be an electrical storage device in a battery electric vehicle (BEV), a hybrid electric vehicle (HEV), or a plug-in hybrid electric vehicle (PHEV), or may be a hydrogen tank in a fuel cell electric vehicle (FCEV).

In the navigation system in the first aspect of the present disclosure, the guiding device may be configured to determine whether or not the vehicle includes first equipment for allowing an energy supply from the energy supply facility to the energy storage device. The predetermined condition (condition for guiding) may include a fact that the vehicle includes the first equipment.

According to the navigation system thus configured, the vehicle is not guided to the supply site when the vehicle does not include the first equipment (equipment for allowing an energy supply from the energy supply facility to the energy storage device). Thus, when the vehicle cannot use the energy supply facility, the vehicle is not guided to the supply site. Accordingly, the degradation of user convenience is restrained.

In the navigation system thus configured, the guiding device may be configured to present first information when the predetermined condition (condition for guiding) is not met, the first information guiding the vehicle to the replacement site and not guiding the vehicle to the supply site. The guiding device may be configured to present any one of second information and third information when the predetermined condition (condition for guiding) is met, the second information guiding the vehicle to both the replacement site and the supply site, the third information guiding the vehicle to the supply site and not guiding the vehicle to the replacement site.

According to the navigation system thus configured, it is easier to perform appropriate guiding, based on whether or not the condition for guiding is met.

In the navigation system thus configured, the guiding device may be configured to determine whether or not an abnormality has occurred in second equipment for allowing the energy storage device to be attached to and detached from the vehicle. The guiding device may be configured to present the third information when it is determined that the vehicle includes the first equipment and that an abnormality has occurred in the second equipment.

According to the navigation system thus configured, when an abnormality occurs in the second equipment (equipment for allowing the energy storage device to be attached to and detached from the vehicle) of the vehicle, the vehicle is not guided to the replacement site and is guided to the supply site. Thus, the vehicle is not guided to the replacement site when the energy storage device cannot be attached to or detached from the vehicle. Accordingly, the degradation of user convenience is restrained. Moreover, the vehicle is guided to the supply site in such a case, whereby user convenience can be enhanced.

The navigation system thus configured may further include a search device configured to search for the replacement site existing in a predetermined area. With regard to the replacement site found in the predetermined area through the search, the guiding device may be configured to acquire stock information indicating stock status of an energy storage device for replacement that is available to be attached to the vehicle in place of the energy storage device, and configured to determine, by using the stock information, whether or not the replacement site has the energy storage device for replacement in stock. The guiding device may be configured to present the third information when it is determined that the vehicle includes the first equipment and that the replacement site including the energy storage device for replacement in stock does not exist in the predetermined area.

According to the navigation system thus configured, when the replacement site including the energy storage device for replacement in stock does not exist in the predetermined area, the vehicle is not guided to the replacement site and is guided to the supply site. Thus, the vehicle can be prevented from being guided to the replacement site including no energy storage device for replacement in stock.

In the navigation system thus configured, each of the energy storage device and the energy storage device for replacement may be an electrical storage device configured to be attachable and detachable by a replacement apparatus. The replacement site may be a site where the replacement apparatus is provided. When it is determined that the replacement site including the energy storage device for replacement in stock exists in the predetermined area, the guiding device may be configured to decide on, by using the stock information, the replacement site including the energy storage device for replacement that satisfies a predetermined requirement, as a target of guiding. The predetermined requirement may be set with regard to at least one of the stored electricity amounts, the maximum output electric power, the maximum regenerated electric power, and the capacity of the electrical storage device.

According to the navigation system thus configured, for the energy storage device for replacement, it is easier to set a requirement (for example, a state or a specification) that is favorable for the vehicle.

In the navigation system thus configured, the guiding device may include a display device configured to display information to a user of the vehicle. Presenting the first information may be that the display device displays the replacement site and does not display the supply site on a map, or that the display device displays the replacement site and the supply site on the map, each in a distinguishable form, in order to guide the vehicle driven by the user. Presenting the second information may be that the display device displays the replacement site and the supply site on a map, or that the display device displays the replacement site and the supply site on the map, each in a distinguishable form, in order to guide the vehicle driven by the user. Presenting the third information may be that the display device displays the supply site and does not display the replacement site on a map, or that the display device displays the replacement site and the supply site on the map, each in a distinguishable form, in order to guide the vehicle driven by the user. In the navigation system thus configured, the guiding device may further include a speaker, in addition to the display device.

According to the navigation system thus configured, one of the replacement site and the supply site is displayed on a map, or both the replacement site and the supply site are displayed on the map, each in a distinguishable form, whereby it is possible to appropriately guide the vehicle. If the guiding device further includes a speaker in addition to the display device, it will be possible to appropriately guide the vehicle by guiding the vehicle via voice in addition to the display. Since the guiding device further includes the speaker in addition to the display device, it is possible to appropriately guide the vehicle by guiding the vehicle via voice in addition to the display.

In the navigation system in the first aspect of the present disclosure, the guiding device may be configured to decide on a target of guiding including at least one of the replacement site and the supply site when a stored energy amount in the energy storage device mounted on the vehicle becomes less than a reference value. The guiding device may be configured to guide the vehicle to the target of guiding.

According to the navigation system thus configured, a target of guiding is decided at a timing when the stored energy amount of the vehicle becomes small, and the vehicle is guided to the target of guiding. A target of guiding is decided at a timing when an energy resupply becomes necessary for the vehicle, whereby it is easier to decide on a target of guiding that is favorable for the vehicle.

The navigation system in the first aspect of the present disclosure may further include an input device configured to receive a request for guiding from a user. The guiding device may be configured to decide on a target of guiding including at least one of the replacement site and the supply site when the input device receives the request for guiding. The guiding device may be configured to guide the vehicle to the target of guiding.

According to the navigation system thus configured, a target of guiding is decided in response to a request from the user, and the vehicle is guided to the target of guiding. A target of guiding is decided at a timing when the user requests guiding, whereby it is easier to decide on a target of guiding that is favorable for the user.

The navigation system in the first aspect of the present disclosure may further include a search device configured to search for the replacement site existing in a predetermined area. When at least one replacement site is to be a target of guiding, the guiding device may be configured to acquire stock information with regard to each candidate for the target of guiding found in the predetermined area through the search, the stock information indicating stock status of an energy storage device for replacement that is available to be attached to the vehicle in place of the energy storage device. The guiding device may be configured to decide on the target of guiding by using the stock information, and to guide the vehicle to the target of guiding.

According to the navigation system thus configured, it is easier to select, and decide on as a target of guiding, the replacement site including the energy storage device for replacement that is available to be attached to the vehicle, from among a plurality of the replacement sites (candidates for the target of guiding) existing in the predetermined area. Accordingly, user convenience can be enhanced. Moreover, it is possible to not guide the vehicle to the replacement site including no energy storage device for replacement in stock. Accordingly, the degradation of user convenience can be restrained.

In the navigation system thus configured, the guiding device may include a display device and a control device, the display device being configured to display information to a user of the vehicle, the control device being configured to control the display device. When the vehicle includes a plurality of the energy storage devices, the control device may be configured to classify the target of guiding as any one of a first replacement site and a second replacement site, the first replacement site having stock status that allows all of the plurality of energy storage devices included in the vehicle to be replaced, the second replacement site having stock status that allows only one or some of the plurality of energy storage devices included in the vehicle to be replaced. The display device may be configured to display the first replacement site and the second replacement site in a form that allows the user to distinguish between the first replacement site and the second replacement site.

According to the navigation system thus configured, the display device displays the first replacement site and the second replacement site in a form that allows the user to distinguish between the first replacement site and the second replacement site. The user can choose which one of the first replacement site and the second replacement site is to be used. Accordingly, user convenience is enhanced.

A second aspect of the present disclosure relates to a vehicle.

The vehicle in the second aspect of the present disclosure includes: a navigation system configured to guide the vehicle; and an electrical storage device as an energy storage device which is attachable and detachable. The vehicle is configured to be able to travel by using electricity output from the electrical storage device. The navigation system includes a guiding device configured to present information for guiding the vehicle to at least one of a replacement site and a supply site. The replacement site is a site where the energy storage device is replaced. The supply site is a site where an energy supply facility is provided, the energy supply facility supplying energy to the energy storage device. The guiding device is configured to guide the vehicle to the supply site when a predetermined condition is met, and to not guide the vehicle to the supply site when the predetermined condition is not met.

According to the vehicle in the second aspect of the present disclosure, the vehicle includes the navigation system. Accordingly, since the advantages of the navigation system are brought about, it is possible to enhance user convenience.

A third aspect of the present disclosure relates to a navigation system including a guiding device.

The navigation system in the third aspect of the present disclosure is configured to guide a vehicle including an energy storage device. The navigation system includes a guiding device configured to present information for guiding the vehicle to at least one of a replacement site and a supply site. The replacement site is a site where the energy storage device is replaced. The supply site is a site where an energy supply facility is provided, the energy supply facility supplying energy to the energy storage device. The guiding device is configured to guide the vehicle to the replacement site when a predetermined condition is met, and to not guide the vehicle to the replacement site when the predetermined condition is not met.

According to the navigation system in the third aspect of the present disclosure, it is also possible to enhance user convenience.

A fourth aspect of the present disclosure relates to a vehicle.

The vehicle in the fourth aspect of the present disclosure includes: a navigation system configured to guide the vehicle; and an electrical storage device as an energy storage device. The vehicle is configured to be able to travel by using electricity output from the electrical storage device. The navigation system includes a guiding device configured to present information for guiding the vehicle to at least one of a replacement site and a supply site. The replacement site is a site where the energy storage device is replaced. The supply site is a site where an energy supply facility is provided, the energy supply facility supplying energy to the energy storage device. The guiding device is configured to guide the vehicle to the replacement site when a predetermined condition is met, and to not guide the vehicle to the replacement site when the predetermined condition is not met.

According to the vehicle in the fourth aspect of the present disclosure, the vehicle includes the navigation system. Accordingly, since the advantages of the navigation system are brought about, it is possible to enhance user convenience.

According to the present disclosure, it is possible to provide a navigation system, as well as a vehicle including the navigation system, that can enhance the convenience of a user of the vehicle including an energy storage device.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows a configuration of a first vehicle according to an embodiment of the present disclosure;
FIG. 2 shows a configuration of a second vehicle according to the embodiment of the present disclosure;
FIG. 3 shows an example of a configuration of a battery replacement system installed at a replacement site, which is a site where a battery pack as shown in FIGS. 1 and 2 is replaced;
FIG. 4 shows an example of a replacement apparatus included in the battery replacement system;
FIG. 5 is a diagram for describing the replacement site for detaching and attaching the battery pack and a supply site;
FIG. 6 is a diagram for describing a configuration, as well as a process flow of operation, of a navigation system according to the embodiment of the present disclosure;
FIG. 7 illustrates a guiding aspect in the process flow shown in FIG. 6;
FIG. 8 is a flowchart showing a first modification of the process flow shown in FIG. 6;
FIG. 9 is a diagram for describing an example of replacement site information and supply site information;
FIG. 10 is a flowchart showing a second modification of the process flow shown in FIG. 6;
FIG. 11 is a flowchart showing a third modification of the process flow shown in FIG. 6;
FIG. 12 shows a modification of the first vehicle shown in FIG. 1;
FIG. 13 shows a modification of the second vehicle shown in FIG. 2;
FIG. 14 is a flowchart showing a fourth modification of the process flow shown in FIG. 6;
FIG. 15 is a flowchart showing a fifth modification of the process flow shown in FIG. 6;
FIG. 16 shows a mobile terminal in which the navigation system according to the embodiment of the present disclosure is mounted;
FIG. 17 is a flowchart showing a sixth modification of the process flow shown in FIG. 6;
FIG. 18 shows a modification of an aspect of displaying replacement sites and supply sites;
FIG. 19 shows a fuel cell electric vehicle including the navigation system according to the embodiment of the present disclosure; and
FIG. 20 is a flowchart showing a seventh modification of the process flow shown in FIG. 6.

### DETAILED DESCRIPTION OF EMBODIMENTS

An embodiment of the present disclosure is described in detail with reference to the drawings. Throughout the drawings, the same or corresponding parts are denoted by the same reference signs, and a description thereof is not repeated.

A vehicle according to the embodiment includes a vehicle body and a battery pack. The vehicle body is part of the vehicle other than the battery pack. For the vehicle according to the embodiment, charge equipment (first equipment) for allowing an electricity supply (energy supply) from electric vehicle supply equipment (EVSE) to the battery pack is optional. On the other hand, replacement equipment (second equipment) for allowing the battery pack to be attached to and detached from the vehicle is mounted in the vehicle as standard equipment. In other words, when a user purchases the vehicle, the user can choose whether or not to add the charge equipment to the vehicle. The user also can add the charge equipment as a retrofit after purchasing the vehicle. Here, the "battery pack" is an example of "energy storage device" in the present disclosure.

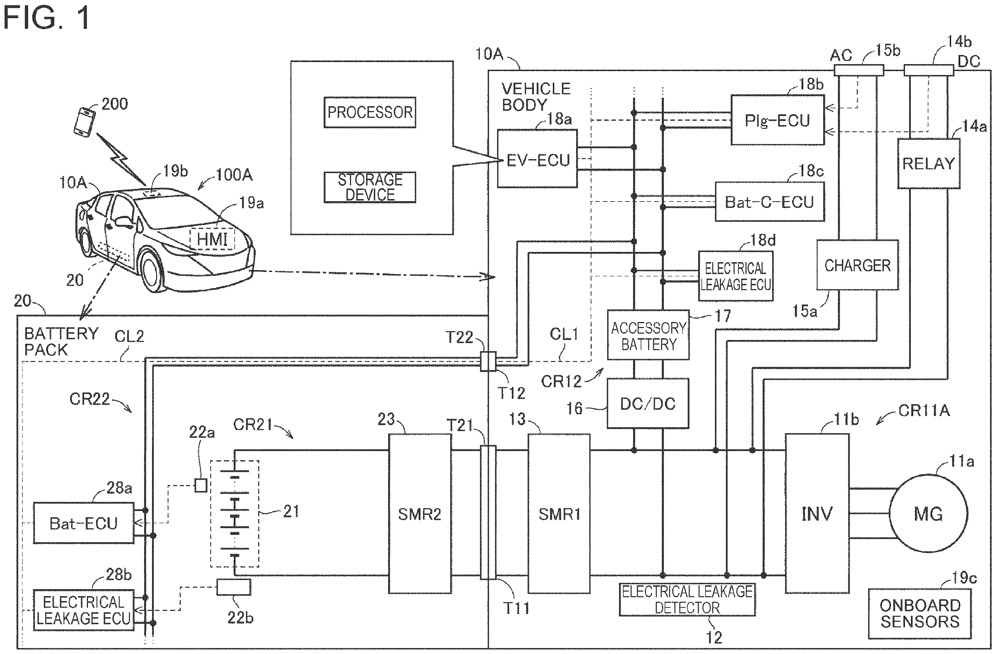

FIG. 1 shows a configuration of a vehicle 100A to which the charge equipment (optional equipment) is added. Referring to FIG. 1, the vehicle 100A includes a vehicle body 10A and a battery pack 20. The vehicle 100A is configured to be able to travel by using electricity output from the battery pack 20. The vehicle 100A is, for example, a battery electric vehicle (BEV) that does not include an internal combustion engine. However, the vehicle 100A is not limited thereto and may be a plug-in hybrid electric vehicle (PHEV) including an internal combustion engine or another electrified vehicle (xEV).

The vehicle body 10A includes circuits CR11A and CR12. The battery pack 20 includes circuits CR21 and CR22. The circuit CR12 includes an accessory battery 17. The circuit CR21 includes a battery 21. The accessory battery 17 corresponds to a low-voltage power supply that outputs electricity at a lower voltage than the voltage of the battery 21. The circuit CR21 applies voltage (high voltage) supplied by the battery 21 to the circuit CR11A. The circuit CR11A receives the applied voltage (high voltage) from the battery 21. The circuit CR12 applies voltage (low voltage) supplied by the accessory battery 17 to the circuit CR22. The circuit CR22 receives the applied voltage (low voltage) from the accessory battery 17. A DC/DC converter 16 is provided between the circuit CR11A and the circuit CR12.

The circuit CR11A in the vehicle body 10A includes a motor generator (MG) 11a, an inverter 11b, a DC charge relay 14a, a DC inlet 14b, an AC charger 15a, and an AC inlet 15b. An electrical leakage detector 12 is provided to the circuit CR11A. A battery management system (BMS) 22a and an electrical leakage detector 22b are provided to the circuit CR21 in the battery pack 20. The vehicle body 10A further includes a terminal T11 to and from which the battery pack 20 is attachable and detachable, and an SMR 13 disposed between the terminal T11 and the circuit CR11A. The circuit CR11A (high-voltage power supply line) is connected to the terminal T11 via the SMR 13. The battery pack 20 further includes a terminal T21 to and from which the vehicle body 10A is attachable and detachable, and an SMR 23 disposed between the terminal T21 and the circuit CR21. The circuit CR21 (high-voltage power supply line) is connected to the terminal T21 via the SMR 23. "SMR" stands for system main relay.

The battery 21 is a secondary battery, such as a lithium-ion battery, a nickel-metal hydride battery, or a sodium ion battery. The type of the secondary battery may be a liquid secondary battery, or may be an all-solid-state secondary battery. A plurality of secondary batteries may form an assembled battery.

The vehicle body 10A further includes a terminal T12. The circuit CR12 (low-voltage power supply line) in the vehicle body 10A is connected to the terminal T12. A communication line CL1 (a dashed line in FIG. 1) in the vehicle body 10A is also connected to the terminal T12. The battery pack 20 further includes a terminal T22. The circuit CR22 (low-voltage power supply line) in the battery pack 20 is connected to the terminal T22. A communication line CL2 (a dashed line in FIG. 1) in the battery pack 20 is also connected to the terminal T22.

The accessory battery 17 supplies electricity for driving accessories mounted in the vehicle 100A. The accessory battery 17 outputs direct-current electricity to the circuit CR12. The circuit CR12 further includes ECUs 18a, 18b, 18c, 18d in addition to the accessory battery 17. The circuit CR22 further includes ECUs 28a, 28b. For example, the accessory battery 17 supplies electricity to each of the ECUs 18a to 18d and 28a, 28b connected to the low-voltage power supply lines. "ECU" stands for electronic control unit.

The ECU 18a corresponds to a control device (EV-ECU) that supervises various control related to the vehicle 100A. The ECU 18b corresponds to a control device (Plg-ECU) that detects the respective states of the DC inlet 14b and the AC inlet 15b. Each of the DC inlet 14b and the AC inlet 15b includes a terminal that detects connection and non-connection of a charge cable (charge plug) and outputs, to the ECU 18b, a signal indicating whether or not the charge cable is connected. The ECU 18c corresponds to a control device (Bat-C-ECU) that controls the DC charge relay 14a and the AC charger 15a. The ECU 18d corresponds to a control device (first electrical leakage ECU) that monitors the circuit CR11A for an electrical leakage state. The ECU 28a corresponds to a control device (Bat-ECU) that monitors the state of the battery 21 and controls the SMR 23. The ECU 28b corresponds to a control device (second electrical leakage ECU) that monitors the circuit CR21 for an electrical leakage state.

Each ECU includes a processor and a storage device. The storage device is configured to be able to retain stored information. In addition to a program, various information to be used by the program is stored in the storage device. In the embodiment, the processor executes the program stored in the storage device, whereby various control is performed. However, such processes may be implemented only by hardware (an electronic circuit), without use of software.

In the vehicle 100A, each ECU is connected to the others via an in-vehicle network in a mutually communicable manner. The in-vehicle network is, for example, a controller area network (CAN). The ECU 18a acquires information from another ECU, and controls the inverter 11b, the DC/DC converter 16, and the SMR 13 and transmits control instructions to the ECU 18c and the ECU 28a.

The electrical leakage detector 12 detects an electrical leakage state (for example, insulation resistance) related to the circuit CR11A and outputs the detected electrical leakage state to the ECU 18d. The BMS 22a detects the state (current, voltage, temperature, SOC, capacity, and the like) of the battery 21 and outputs a result of the detection to the ECU 28a. The state of charge (SOC) indicates a remaining amount of stored electricity and, for example, indicates the proportion of the current amount of stored electricity to the amount of stored electricity in a fully charged state, in a range of 0 to 100%. The capacity of a battery corresponds to the amount of electricity (kWh) stored in the battery in a fully charged state. The electrical leakage detector 22b detects an electrical leakage state (for example, insulation resistance) related to the circuit CR21 and outputs the detected electrical leakage state to the ECU 28b. The ECU 18a acquires information indicating the battery state and the electrical leakage states from the ECUs 18d, 28a, 28b.

The DC/DC converter 16 performs voltage transformation of direct-current electricity between the circuit CR11A and the circuit CR12. Specifically, the DC/DC converter 16 steps down the voltage of direct-current electricity from the battery 21 and outputs lower-voltage direct-current electricity to the accessory battery 17. The ECU 18a may control the DC/DC converter 16 in such a manner that electricity is supplied from the battery 21 (main battery) to the accessory battery 17 when the remaining amount of stored electricity in the accessory battery 17 becomes small. The capacity of the battery 21 is larger than the capacity of the accessory battery 17. Each of the SMRs 13, 23 switches between connection and interruption of an electrical circuit between the circuit CR11A and the circuit CR21. The ECU 18a brings both the SMRs 13, 23 into a closed state (connection state) when the voltage of the battery 21 is applied to the circuit CR11A, and brings at least one of the SMRs 13, 23 into an open state (interruption state) when the voltage of the battery 21 is not applied to the circuit CR11A.

The terminals T21, T22 of the battery pack 20 are configured to be attachable to and detachable from the terminals T11, T12 of the vehicle body 10A, respectively. By the terminals T21 and T22 being connected to the terminals T11 and T12, respectively, the battery pack 20 is attached to the vehicle body 10A, and the vehicle 100A is completed. In the vehicle 100A, the circuit CR11A in the vehicle body 10A is connected to the circuit CR21 in the battery pack 20 via the SMRs 13, 23. Moreover, the circuit CR12 in the vehicle body 10A is connected to the circuit CR22 in the battery pack 20. The communication lines CL1 and CL2 are also connected to each other. The communication lines constitute the in-vehicle network.

The MG 11a functions as a motor for traveling. The inverter 11b functions as a power control unit (PCU) for the MG 11a. The inverter 11b drives the MG 11a by using electricity supplied from the battery 21. The MG 11a converts electric power into torque and rotates drive wheels of the vehicle 100A. Moreover, the MG 11a regenerates electricity and charges the battery 21, for example, when the vehicle 100A decelerates.

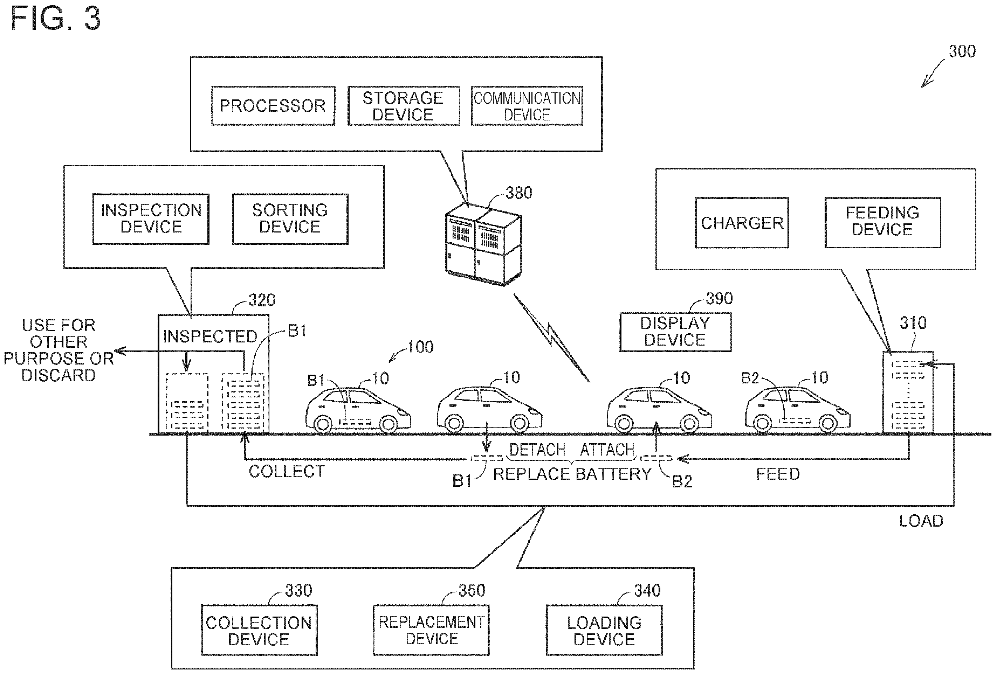

The vehicle body 10A further includes a human machine interface (HMI) 19a and a communication device 19b. The HMI 19a and the communication device 19b also receive an electricity supply from the accessory battery 17. The HMI 19a includes an input device and a display device installed on the vehicle body 10A. The communication device 19b is configured to be able to wirelessly communicate with a mobile terminal 200 and a server 380 (FIG. 3), which will be described later. The mobile terminal 200 corresponds to a mobile terminal that can be carried by the user. The mobile terminal 200 is, for example, a smartphone including a touch-panel display. However, the mobile terminal 200 is not limited thereto, and a laptop computer, a portable game console, a wearable device, an electronic key, or the like may be adopted for the mobile terminal 200.

Various undepicted sensors (onboard sensors 19c) are also mounted in the vehicle body 10A. The onboard sensors 19c may include a sensor that detects the state (current, voltage, temperature, or the like) of the accessory battery 17, a sensor that detects charged electricity (charged voltage and charged current), a sensor that detects input electricity and output electricity of the inverter 11b, and a sensor that detects that the battery pack 20 is connected and/or fixed to the vehicle body 10A. The ECU 18a is configured to acquire results of the detection by such sensors directly or via another ECU.

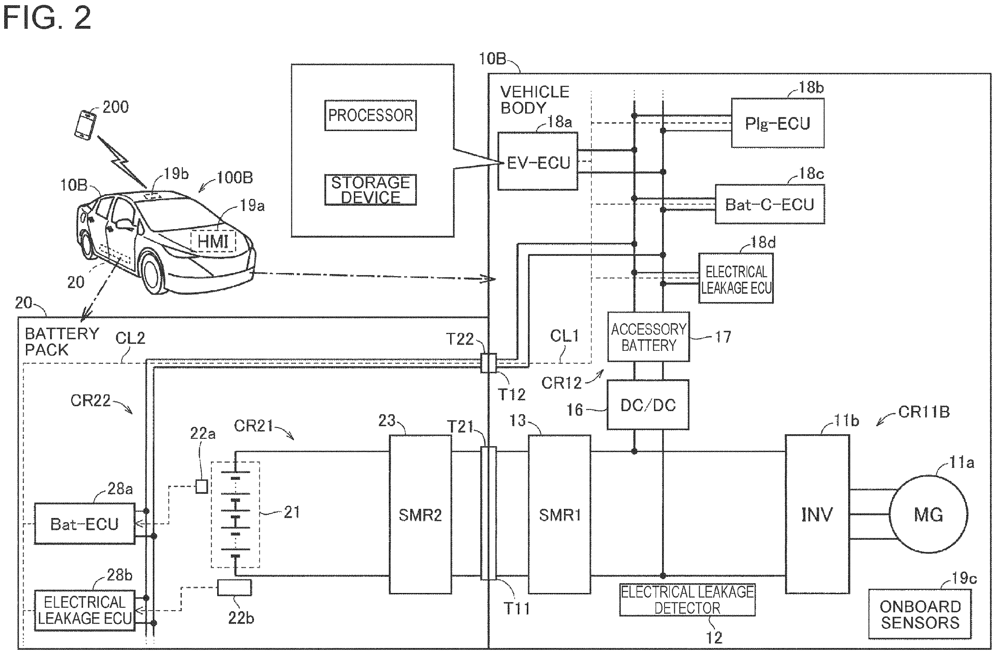

FIG. 2 shows a configuration of a vehicle 100B to which the charge equipment (optional equipment) is not added. Referring to FIG. 2, the vehicle 100B includes a vehicle body 10B and the battery pack 20. The vehicle 100B has the configuration of the vehicle 100A shown in FIG. 1 from which the DC charge relay 14a, the DC inlet 14b, the AC charger 15a, and the AC inlet 15b are removed. The vehicle body 10B includes a circuit CR11B. The circuit CR11B includes a vehicle transmission system (the MG 11a and the inverter 11b), but does not include the charge equipment (the DC charge relay 14a, the DC inlet 14b, the AC charger 15a, and the AC inlet 15b). By including the vehicle transmission system, the vehicle 100B is configured to be able to travel by using electricity stored in the battery pack 20. The vehicle 100A and the vehicle 100B have common control systems. The vehicle body 10B according to the embodiment, similarly to the vehicle body 10A, includes the ECUs 18b, 18c. Thus, the charge equipment can be easily added as a retrofit. However, the ECUs 18b, 18c may be omitted from the configuration of the vehicle body 10B shown in FIG. 2.

Each of the vehicles 100A and 100B includes the replacement equipment for allowing the battery pack 20, which is replaceable, to be attached and detached. A battery pack (battery pack 20) mounted on each of the vehicles 100A and 100B can be replaced with another battery pack. Hereinafter, when no distinction is made, each of the vehicle 100A and the vehicle 100B is referred to as "vehicle 100", and each of the vehicle body 10A and the vehicle body 10B is referred to as "vehicle body 10".

FIG. 3 shows an example of a configuration of a battery replacement system that performs battery pack replacement. A battery replacement system 300 shown in FIG. 3 is installed, for example, in a battery replacement station. Referring to FIG. 3, the battery replacement system 300 is configured to detach a battery pack mounted on a vehicle 100 from a vehicle body 10 thereof and attach another battery pack to the vehicle body 10. Hereinafter, a battery pack (first electrical storage device) to be collected from a vehicle 100 is referred to as "battery pack B1". A battery pack (second electrical storage device) to be attached to the vehicle 100 in place of the battery pack B1 is referred to as "battery pack B2". The battery pack B2 corresponds to a battery pack for replacement (energy storage device for replacement) that can be attached to a vehicle 100 in place of the battery pack B1. Each of the battery packs B1, B2 has the same configuration as the battery pack 20 shown in FIG. 1, FIG. 2. The battery pack B2 attached to the vehicle body 10 functions as the battery pack 20 (FIG. 1, FIG. 2) in the vehicle 100.

The battery replacement system 300 according to the embodiment includes a first keeping apparatus 310, a second keeping apparatus 320, a collection apparatus 330, a loading apparatus 340, a replacement apparatus 350, the server 380, and a display device 390. The first keeping apparatus 310 keeps a plurality of battery packs to be fed to vehicles. The first keeping apparatus 310 includes a charger and a feeding device in addition to a pack accommodation part (for example, a storage). The second keeping apparatus 320 keeps a plurality of battery packs collected from a plurality of vehicles. The second keeping apparatus 320 includes an inspection device and a sorting device in addition to a pack accommodation part (for example, a storage). The server 380 includes a processor, a storage device, and a communication device. The storage device stores information related to each battery pack existing in the battery replacement system 300 by making distinctions based on identification information on the battery packs. The display device 390 displays information in accordance with an instruction from the server 380.

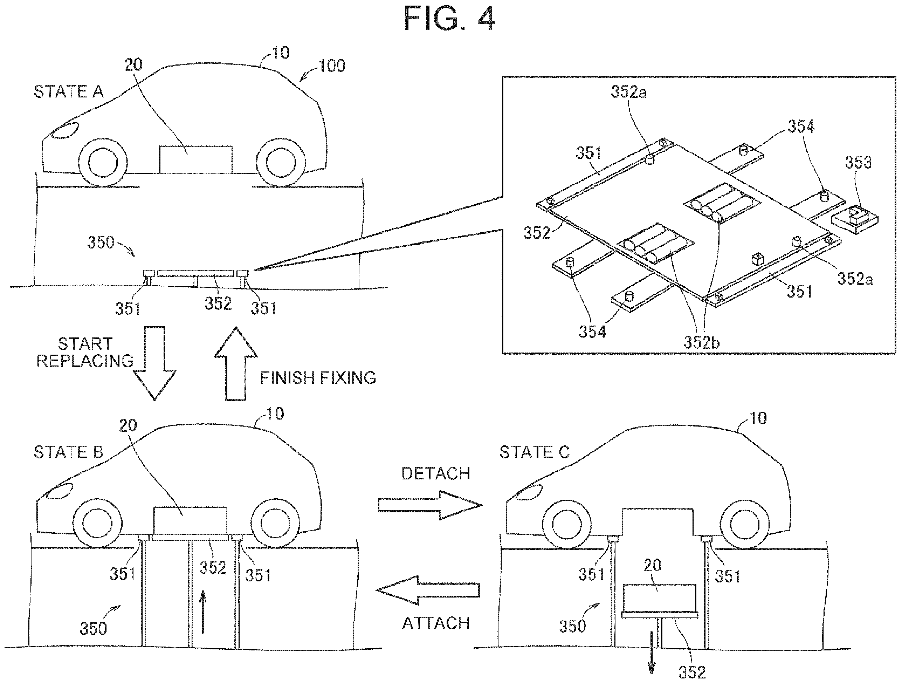

FIG. 4 shows an example of the replacement apparatus 350. Referring to FIG. 4, the replacement apparatus 350 is configured to replace a battery pack attached to a vehicle body with another battery pack. Specifically, the replacement apparatus 350 includes vehicle body holding parts 351, a battery holding part 352, a battery adjustment part 353, and battery fixing parts 354. The battery holding part 352 includes a plate member, as well as positioning pins 352a and conveyance parts 352b that are provided on the plate member. Each conveyance part 352b includes, for example, rollers that can ascend, descend, and rotate. The battery adjustment part 353 is configured to be able to adjust the position and angle of the battery pack held by the battery holding part 352 by changing the position and angle of a positioning member (for example, an L-shaped block arranged at a corner of the battery pack). The battery fixing parts 354 are connected to the battery holding part 352. Each battery fixing part 354 is configured to, through use of an electrical tool, fix the battery pack held by the battery holding part 352 to the vehicle body and undo the fixing between the vehicle body and the battery pack. The battery fixing parts 354 may include an electrical tool that tightens and loosens a bolt. While a depiction is omitted, the replacement apparatus 350 further includes an actuator (for example, a motor) that drives each part.

The replacement apparatus 350 replaces a battery pack of a vehicle 100, for example, through a procedure as described below. Before replacement work is started, the replacement apparatus 350 is in a state A shown in FIG. 4. In other words, the vehicle body holding parts 351 and the battery holding part 352 are positioned below the vehicle 100. The replacement apparatus 350 may detect the position of the vehicle 100 by using various sensors and/or cameras. When the replacement apparatus 350 receives from the server 380 an instruction to detach the battery pack, the vehicle body holding parts 351 and the battery holding part 352 ascend toward the vehicle 100, and the replacement apparatus 350 becomes in a state B shown in FIG. 4. While a depiction is omitted, the battery adjustment part 353 has also ascended to the same level as the battery holding part 352 in the state B. In the state B, the vehicle body 10 is held by the vehicle body holding parts 351. The vehicle body holding parts 351 may lift the vehicle body 10 and hold the vehicle body 10 aloft. On the other hand, the battery pack 20 (battery pack B1) is held by the battery holding part 352. At the time, the positioning pins 352a are inserted into holes provided in the bottom face of the battery pack 20. Thus, the battery pack 20 and the battery holding part 352 (and the battery fixing parts 354) fall in a predetermined positional relation. Then, the battery fixing parts 354 undo a fixing (for example, a fastening with bolts) between the vehicle body 10 and the battery pack 20. Thus, the vehicle body 10 and the battery pack 20 can be separated. After the fixing is undone, the battery holding part 352 descends in such a manner as to go away from the vehicle body 10 while holding the battery pack 20, and the replacement apparatus 350 becomes in a state C shown in FIG. 4. Thus, the battery pack 20 is detached from the vehicle body 10. While a depiction is omitted, the battery adjustment part 353 has also descended to the same level as the battery holding part 352 in the state C. Subsequently, the conveyance parts 352b detach the battery pack 20 held by the battery holding part 352 from the positioning pins 352a, and convey and pass the battery pack 20 to the collection apparatus 330 (FIG. 3).

Thereafter, based on an instruction to attach a battery pack from the server 380, a battery pack 20 (battery pack B2) is fed from the first keeping apparatus 310 (FIG. 3) to the battery holding part 352. Then, the position and angle of the battery pack 20 are adjusted by the battery adjustment part 353, whereby the positioning pins 352a are inserted into holes provided in the bottom face of the battery pack 20. Subsequently, the battery holding part 352 ascends toward the vehicle body 10 while holding the battery pack 20, and the replacement apparatus 350 becomes in the state B again. Thus, the battery pack 20 held by the battery holding part 352 is attached to the vehicle body 10. When the replacement apparatus 350 receives an instruction to fix the battery pack from the server 380, the battery fixing parts 354 fix (for example, fasten with bolts) the battery pack 20 held by the battery holding part 352 to the vehicle body 10. After the fixing is finished, the vehicle body holding parts 351 and the battery holding part 352 descend in such a manner as to go away from the vehicle body 10, and the replacement apparatus 350 returns to the state A. Thus, the replacement work is completed. At the time, the display device 390 may display the fact that the replacement work is completed. Note that the configuration of the replacement apparatus and the procedure of the replacement work described above are only an example, and changes can be made as appropriate. Automation of the replacement work is not essential. A user may manually replace a replaceable battery pack (electrical storage device).

For the detached battery pack B1, a reuse process is performed. Specifically, as shown in FIG. 3, the collection apparatus 330 conveys (collects) the battery pack B1 from the replacement apparatus 350 to the second keeping apparatus 320. A plurality of battery packs kept by the second keeping apparatus 320 is inspected in turn by the inspection device, and the sorting device sorts the battery packs by purpose of use, based on results of the inspection. Each battery pack is reused for a corresponding purpose of use (for onboard use, for stationary use, and the like). However, a battery pack that cannot be reused in an as-is state is disassembled to be recycled as materials, or is discarded. A battery pack (for onboard use) that is reused in the battery replacement system 300 is conveyed to the first keeping apparatus 310 by the loading apparatus 340. The conveyed battery pack is loaded into the first keeping apparatus 310.

FIG. 3 shows an example in which detachment of a battery pack and attachment of a battery pack are carried out at different positions. Adjustment of the position of a vehicle may be performed before a battery pack is detached or before a battery pack is attached (after a battery pack is detached), or at both timings. A conveyance apparatus (for example, a conveyer-based conveyance apparatus) or a delivery robot, which are not depicted, may move a vehicle. However, detachment of a battery pack and attachment of a battery pack may be performed at the same position. Battery pack replacement (detachment and attachment) may be performed with a vehicle in a stationary state. Respective conveyance methods used by the collection apparatus 330, the feeding device, and the loading apparatus 340 are also arbitrary. The conveyance methods may be a conveyer-based method or may be a method using a delivery robot.

In the embodiment, the vehicle 100A (FIG. 1) includes the replacement equipment (for example, an onboard device that enables the battery pack 20 to be attached and detached by the replacement apparatus 350 shown in FIG. 4) and the charge equipment (for example, the DC charge relay 14a, the DC inlet 14b, the AC charger 15a, and the AC inlet 15b shown in FIG. 1). Accordingly, the vehicle 100A can use both a replacement site and a supply site. In contrast, the vehicle 100B (FIG. 2) includes the replacement equipment and does not include the charge equipment. Accordingly, the vehicle 100B can use the replacement apparatus but cannot use a supply site. The replacement site is a place (site) where a battery pack is replaced. The replacement site is, for example, a site (for example, a battery replacement station) where the replacement apparatus 350 is provided. The supply site is a site (for example, a charging station) where an EVSE is provided.

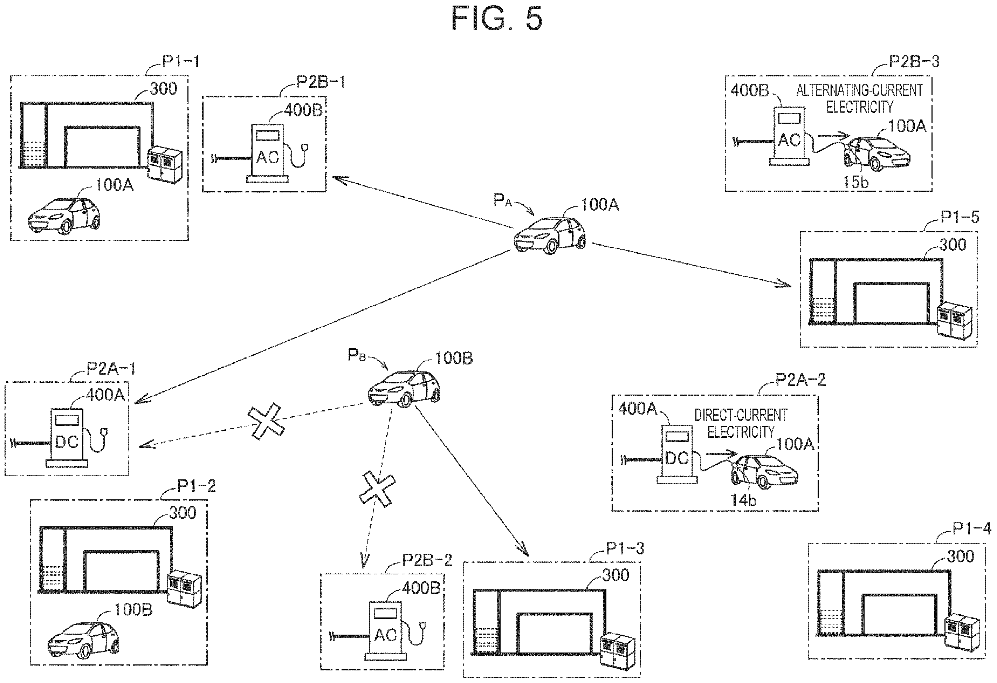

FIG. 5 is a diagram for describing the replacement site and the supply site. Referring to FIG. 5, the battery replacement system 300 (including the replacement apparatus 350) shown in FIG. 3 is provided at each of replacement sites P1-1, P1-2, P1-3, P1-4, P1-5, and so on. A DC-EVSE 400A that outputs direct-current electricity is provided at each of supply sites P2A-1, P2A-2, and so on. An AC-EVSE 400B that outputs alternating-current electricity is provided at each of supply sites P2B-1, P2B-2, P2B-3, and so on. Each EVSE is connected to an undepicted external power supply (for example, an electrical power system).

The replacement sites P1-1, P1-2 are being used by a vehicle 100A, a vehicle 100B, respectively. At the replacement sites, a battery pack is replaced through the replacement procedure as described above (see FIGS. 3 and 4).

The supply site P2A-2 is being used by a vehicle 100A. Specifically, in the vehicle 100A, charging control is performed through cooperation of the ECUs 18a to 18c shown in FIG. 1. The ECU 18a acquires information indicating the state (connection or non-connection) of the DC inlet 14b from the ECU 18b and transmits a control instruction to the ECU 18c. For example, the DC inlet 14b is connected to a DC-EVSE 400A via a charge cable and receives direct-current electricity from the DC-EVSE 400A (outside of the vehicle). The battery 21 in the battery pack 20 is charged with direct-current electricity input from the DC-EVSE 400A to the DC inlet 14b. At the time, the ECU 18a brings the SMRs 13, 23 into a closed state (connection state), and the ECU 18c brings the DC charge relay 14a into a closed state (connection state). When charging is finished, the ECU 18c brings the DC charge relay 14a into an open state (interruption state).

The supply site P2B-3 is being used by a vehicle 100A. Specifically, in the vehicle 100A, charging control is performed through cooperation of the ECUs 18a to 18c shown in FIG. 1. The ECU 18a acquires information indicating the state (connection or non-connection) of the AC inlet 15b from the ECU 18b and transmits a control instruction to the ECU 18c. For example, the AC inlet 15b is connected to an AC-EVSE 400B via a charge cable and receives alternating-current electricity from the AC-EVSE 400B (outside of the vehicle). The AC charger 15a performs AC-to-DC conversion. In a state where both the SMRs 13, 23 are in a closed state (connection state) and where alternating-current electricity is input from the outside of the vehicle into the AC charger 15a via the AC inlet 15b, the ECU 18c controls the AC charger 15a. In accordance with a control instruction from the ECU 18c, the AC charger 15a converts alternating-current electricity into direct-current electricity and outputs direct-current electricity to the battery 21 in the battery pack 20. Thus, the battery 21 is charged. When charging is finished, the ECU 18c interrupts supplied electricity (charged electricity) via the AC charger 15a.

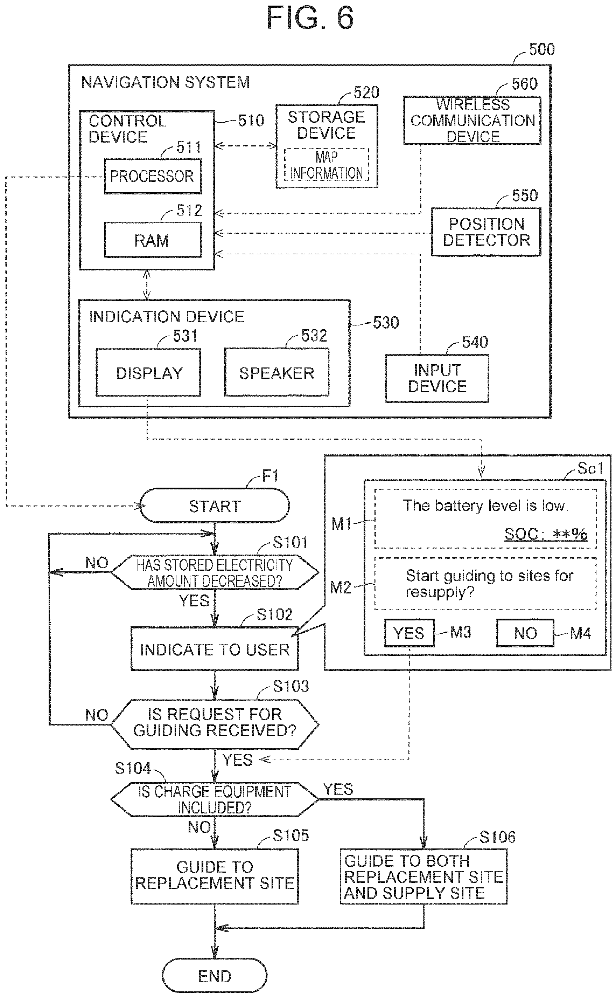

Incidentally, at a time of resupplying a vehicle 100A or 100B with energy, user convenience may be able to be enhanced by guiding the vehicle (vehicle 100A or 100B) to a replacement site or a supply site as described above. For example, when the amount of stored energy (for example, the amount of stored electricity in the battery pack 20) of a vehicle 100A at a portion P_{A} shown in FIG. 5 becomes small, it is conceivable that the vehicle 100A will be guided to the replacement site P1-5, the supply site P2A-1, and the supply site P2B-1. Thus, it becomes easier for the vehicle 100A to be resupplied with energy by the replacement apparatus 350, the DC-EVSE 400A, or the AC-EVSE 400B, and the convenience of a user of the vehicle 100A is enhanced. When the amount of stored energy of a vehicle 100B at a position P_{B} shown in FIG. 5 becomes small, it is conceivable that the vehicle 100B will be guided to the replacement site P1-3, the supply site P2A-1, and the supply site P2B-2. However, the vehicle 100B does not include equipment for allowing an electricity supply from each of the DC-EVSE 400A and the AC-EVSE 400B to the battery pack 20. Accordingly, if the vehicle 100B is guided to the supply site P2A-1 and the P2B-2, the convenience of a user of the vehicle 100B may be rather impaired. Accordingly, the vehicle 100 (vehicle 100A, 100B) according to the embodiment includes a navigation system 500 shown in FIG. 6. FIG. 6 is a diagram for describing a configuration and operation of the navigation system 500 according to the embodiment.

Referring to FIG. 6, in the embodiment, the navigation system 500 is included in the HMI 19a of each of the vehicle 100A (FIG. 1) and the vehicle 100B (FIG. 2). The navigation system 500 includes a control device 510, a storage device 520, an indication device 530, an input device 540, a position detector 550, and a wireless communication device 560.

The control device 510 includes a processor 511, such as a central processing unit (CPU), and a random-access memory (RAM) 512 that temporarily stores data. A control program and map information are stored in the storage device 520 beforehand. The map information includes information (for example, position information and specification information) related to a plurality of replacement sites and a plurality of supply sites. The processor 511 executes the program stored in the storage device 520, whereby a process flow F1, which will be described later, is performed. However, processes in the process flow F1 may be performed only by hardware (an electronic circuit), without use of software.

The indication device 530 includes a display 531 and a speaker 532. The display 531 is, for example, a touch-panel display. The display 531 may include an instrument cluster panel or a head-up display. The display 531 may change orientations in accordance with an instruction from the control device 510. The display 531 may render a display based on extended reality (XR) technology (the technology that combines a real physical space with a virtual space), such as virtual reality (VR) or augmented reality (AR). The speaker 532 may include a buzzer.

The input device 540 outputs a signal according to an input from a user to the control device 510. The input device 540 may include a smart speaker that accepts a voice input. The input device 540 may include a recognition device that recognizes the state of the user. The recognition device may include a camera that acquires a video of the inside of the vehicle. When the recognition device recognizes a predetermined sign (for example, a hand sign such as V sign) made by the user, a signal according to the recognized sign may be output from the input device 540 to the control device 510. According to such a recognition device, it is possible for the user to make a predetermined request to the control device 510 by giving a sign to the input device 540 by using a hand or the like.

The position detector 550 may be a sensor that detects the current position (for example, the longitude and latitude) of the vehicle 100 by using a positioning system, such as the global positioning system (GPS). The position detector 550 may calculate the position of the vehicle 100 by using a gyro sensor (not shown) that detects a rotation (a change in orientation) of the vehicle 100.

The wireless communication device 560 is communication equipment that can wirelessly communicate with the outside of the vehicle. The control device 510 may access a communication network via the wireless communication device 560 and acquire arbitrary information (for example, the latest map information) from a data center (not shown) in the communication network.

The control device 510 performs the process flow F1 (S101 to S106) in FIG. 6. Hereinafter, a vehicle (vehicle 100A or 100B) including the navigation system 500 is referred to as "target vehicle". Regardless of whether the target vehicle is a vehicle 100A or 100B, the control device 510 of the navigation system 500 mounted in the target vehicle performs the process flow F1. For example, when the navigation system 500 is activated, the process flow F1 is started.

In S101, the control device 510 determines whether or not the amount of stored electricity (for example, SOC) in the battery 21 in the battery pack 20 is less than a predetermined reference value. The control device 510 may acquire a result of detection by the BMS 22a in the battery pack 20 from the ECU 18a. The determination in S101 is repeatedly performed while the amount of stored electricity in the battery 21 is not less than the reference value (NO in S101). When the amount of stored electricity in the battery 21 is less than the reference value (YES in S101), in S102, the control device 510 controls the indication device 530 in such a manner that the indication device 530 performs an indication process for the user. For example, the control device 510 causes the display 531 (touch-panel display) to display a screen Sc1. The screen Sc1 displays a message M1, which indicates that the amount of stored electricity in the battery pack 20 (battery 21) has decreased, a message M2, which prompts the user to choose whether or not to request guiding from the navigation system 500, and operation portions M3, M4. The operation portion M3 receives a request for guiding from the user. The display 531 functions as both a display device and an input device.

In subsequent S103, the control device 510 determines whether or not the display 531 receives a request for guiding. Specifically, when the operation portion M3 is operated by the user, it is determined that the display 531 receives a request for guiding (YES in S103), and the process moves to S104. When the operation portion M4 is operated by the user, it is determined that the display 531 does not receive a request for guiding (NO in S103), and the process returns to the first step (S101). Note that in place of, or in addition to, the display 531, the input device 540 may receive a request for guiding from the user.

In S104, the control device 510 determines whether or not the target vehicle includes the charge equipment (equipment for allowing an electricity supply from an EVSE outside of the vehicle to the battery pack 20). For example, the control device 510 may acquire, from the ECU 18a, information indicating whether or not the target vehicle includes the charge equipment. The ECU 18a may determine whether or not the target vehicle includes the charge equipment, based on information (particularly, information related to the DC charge relay 14a, the DC inlet 14b, the AC charger 15a, and the AC inlet 15b) acquired from at least one of the ECUs 18b, 18c. Alternatively, specification information indicating equipment (particularly, the presence or absence of optional equipment) of the target vehicle may be stored beforehand in a storage device of an onboard ECU (for example, the ECU 18a) or the storage device 520 of the navigation system 500. Alternatively, the user may input specification information related to equipment (particularly, the presence or absence of optional equipment) of the target vehicle, for example, via the input device 540. The control device 510 may refer to such specification information and determine whether or not the target vehicle includes the charge equipment.

When it is determined that the target vehicle does not include the charge equipment (for example, the target vehicle is a vehicle 100B) (NO in S104), in S105, the control device 510 controls the indication device 530 by referring to the map information in such a manner that guiding (first guiding) of the target vehicle is performed. Specifically, in S105, the control device 510 guides the target vehicle to a replacement site and does not guide the target vehicle to a supply site. When it is determined that the target vehicle includes the charge equipment (for example, the target vehicle is a vehicle 100A) (YES in S104), in S106, the control device 510 controls the indication device 530 by referring to the map information in such a manner that guiding (second guiding) of the target vehicle is performed. Specifically, in S106, the control device 510 guides the target vehicle to both a replacement site and a supply site. A replacement site is a site where the replacement apparatus is provided that can replace the battery pack 20 of the target vehicle. A supply site is a site where an EVSE is provided that can supply electricity to the battery pack 20 of the target vehicle. The control device 510 continues guiding in each of S105 and S106 until a request to finish guiding is received from the user. The user may request that the control device 510 finish guiding, via the display 531 (touch panel) or the input device 540. The control device 510 finishes guiding when a request to finish guiding is received from the user. Thus, the process flow F1 is terminated.

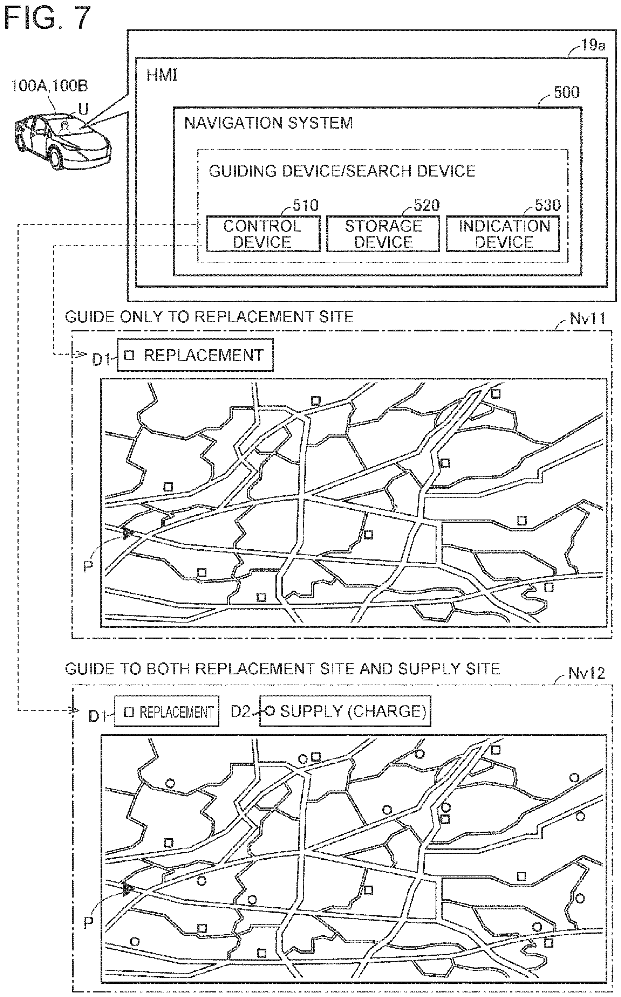

FIG. 7 illustrates a guiding aspect in each of S105, S106. Referring to FIG. 7 along with FIG. 6, the display 531 displays information to a user U of the target vehicle (vehicle 100A, 100B). In S105, the display 531 displays a screen Nv11 in order to guide the target vehicle driven by the user U. The screen Nv11 displays replacement sites on a map by using an image D1. The screen Nv11 does not display supply sites. In S106, the display 531 displays a screen Nv12 in order to guide the target vehicle driven by the user U. The screen Nv12 displays the replacement sites on the map by using the image D1 and displays supply sites on the map by using an image D2. The screen Nv12 displays the replacement sites and the supply sites in a form that allows the user to distinguish between the replacement sites and the supply sites. The screen Nv12 displays the replacement sites and the supply sites on the map, for example, in such a manner that the sites are differentiated by using the images D1, D2 having different shapes. Each of the screens Nv11 and Nv12 displays the map around the target vehicle and also indicates the current position of the target vehicle on the map by using an image P. The map around and the current position of the target vehicle are updated successively. When the user U selects and designates one site from the at least one site displayed in the screen Nv11 or Nv12, the control device 510 may search for a route from the current position (image P) of the target vehicle to the designated site (destination) and cause the display 531 to display a result of the search. The control device 510 may control the speaker 532 in such a manner that the speaker 532 guides the user U via voice in accordance with a result of the search. The user U may designate a destination through a touch panel operation on the display 531.

As described above, the navigation system 500 according to the embodiment is configured to perform each process in the process flow F1 shown in FIG. 6. The navigation system 500 guides each of vehicles 100A, 100B (see FIG. 7), each including a battery pack 20 that is attachable and detachable by the replacement apparatus 350 (see FIG. 3, FIG. 4). The navigation system 500 includes a guiding device that presents information for guiding the target vehicle (vehicle 100A, 100B) to at least one of a replacement site and a supply site. In the embodiment, the control device 510, the storage device 520, and the indication device 530 cooperate with each other to function as the guiding device. The guiding device guides the target vehicle to a supply site when a condition for guiding is met, and does not guide the target vehicle to a supply site when the condition for guiding is not met. In the embodiment, the condition for guiding is met when the target vehicle includes the charge equipment (YES in S104), and the condition for guiding is not met when the target vehicle does not include the charge equipment (NO in S104). For example, when the target vehicle is a vehicle 100A, the condition for guiding is met, and the navigation system 500 guides the target vehicle to a replacement site and a supply site. When the target vehicle is a vehicle 100B, the condition for guiding is not met, and the navigation system 500 guides the target vehicle only to a replacement site, of the replacement site and a supply site.

The navigation system 500 having the configuration as described above can be mounted in both vehicles 100A, 100B. Since a vehicle 100B cannot use a supply site, it is conceivable that the convenience of a user of the vehicle 100B will be degraded if the vehicle 100B is guided to a supply site. Accordingly, in the navigation system 500, the condition for guiding is configured to not be met when it is predicted that user convenience will be degraded if a vehicle is guided to a supply site. Thus, the degradation of user convenience can be restrained. In contrast, a vehicle 100A, which can use a supply site, is guided to a supply site. Thus, the convenience of a user of the vehicle 100A is enhanced.

The guiding device of the navigation system 500 according to the embodiment presents first information (see the screen Nv11 in FIG. 7) that guides the target vehicle to a replacement site and does not guide the target vehicle to a supply site when the condition for guiding is not met, and presents second information (see the screen Nv12 in FIG. 7) that guides the target vehicle to both a replacement site and a supply site when the condition for guiding is met. However, the guiding device is not limited thereto and may be configured to present third information that guides the target vehicle to a supply site and does not guide the target vehicle to a replacement site.

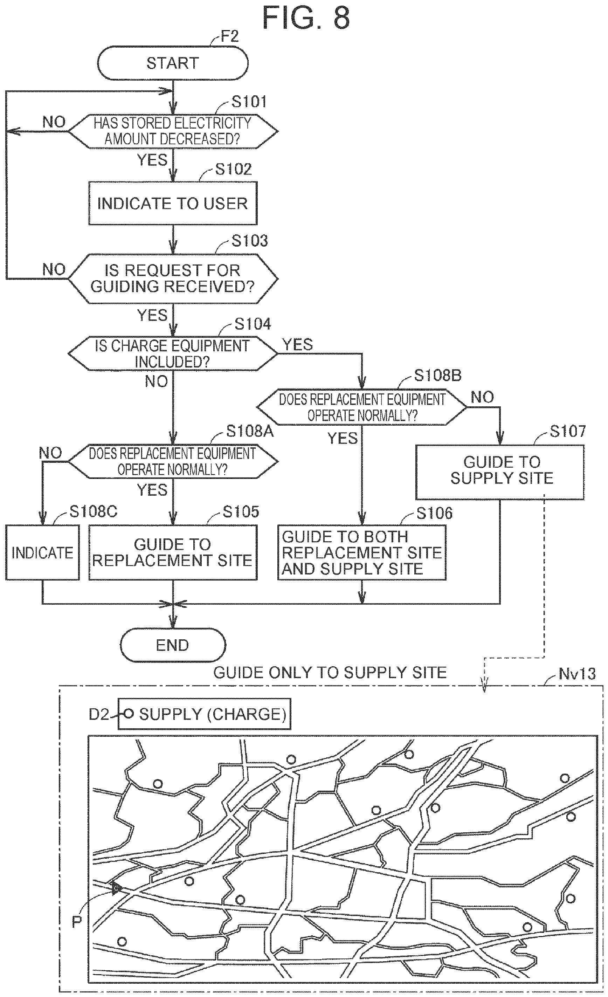

The control device 510 of the navigation system 500 may perform a process flow F2 shown in FIG. 8, instead of the process flow F1 shown in FIG. 6. FIG. 8 is a flowchart showing a first modification of the process flow F1 shown in FIG. 6. The process flow F2 is the same as the process flow F1, except for the addition of S107, S108A, S108B, S108C.

Referring to FIG. 8, in the present modification, when it is determined that the target vehicle does not include the charge equipment (NO in S104), the process moves to S108A. When it is determined that the target vehicle includes the charge equipment (YES in S104), the process moves to S108B. In each of S108A, S108B, the control device 510 determines whether or not the replacement equipment (equipment for allowing the battery pack 20 to be attached and detached) of the target vehicle operates normally. When an abnormality occurs in the replacement equipment, the determination in each of S108A, S108B results in NO. For example, the determination in each of S108A, S108B results in NO when a failure occurs in an onboard sensor or the like that is used in replacement of the battery pack 20.

When the determination is NO in S108A, in subsequent S108C, the control device 510 causes the indication device 530 to perform a predetermined indication process, and then the process flow F2 is terminated. In S108C, for example, the display 531 may display a message informing the user that it is impossible to receive an energy resupply due to an abnormality of equipment of the target vehicle although the amount of stored energy of the target vehicle has decreased. Alternatively, the speaker 532 may sound an alarm.

When the determination is NO in S108B, the process moves to S107. In S107, the control device 510 of the navigation system 500 controls the indication device 530 by referring to the map information in such a manner that guiding (third guiding) of the target vehicle is performed. Specifically, in S107, the control device 510 guides the target vehicle to a supply site and does not guide the target vehicle to a replacement site. For example, the display 531 displays a screen Nv13 in order to guide the target vehicle driven by the user. The screen Nv13 displays supply sites on a map by using the image D2. The screen Nv13 does not display replacement sites.

When the replacement equipment of the target vehicle operates normally, the determination in each of S108A, S108B results in YES. When the determination is YES in S108A, in subsequent S105, the display 531 displays the screen Nv11 (see FIG. 7). When the determination is YES in S108B, in subsequent S106, the display 531 displays the screen Nv12 (see FIG. 7).

In the modification shown in FIG. 8, when the condition for guiding is not met and when the replacement equipment of the target vehicle operates normally, the navigation system 500 presents the first information (see the screen Nv11 in FIG. 7). When the condition for guiding is met and when the replacement equipment of the target vehicle operates normally, the navigation system 500 presents the second information (see the screen Nv12 in FIG. 7). When the condition for guiding is met and when an abnormality occurs in the replacement equipment of the target vehicle, the navigation system 500 presents the third information (see the screen Nv13 in FIG. 8). According to such a configuration, when the target vehicle cannot use the replacement apparatus, the target vehicle is not guided to a replacement site. Accordingly, the degradation of user convenience is restrained. Moreover, the target vehicle is guided to a supply site in such a case, whereby user convenience can be enhanced. Note that in the present modification, the condition for guiding is met when the target vehicle includes the charge equipment.

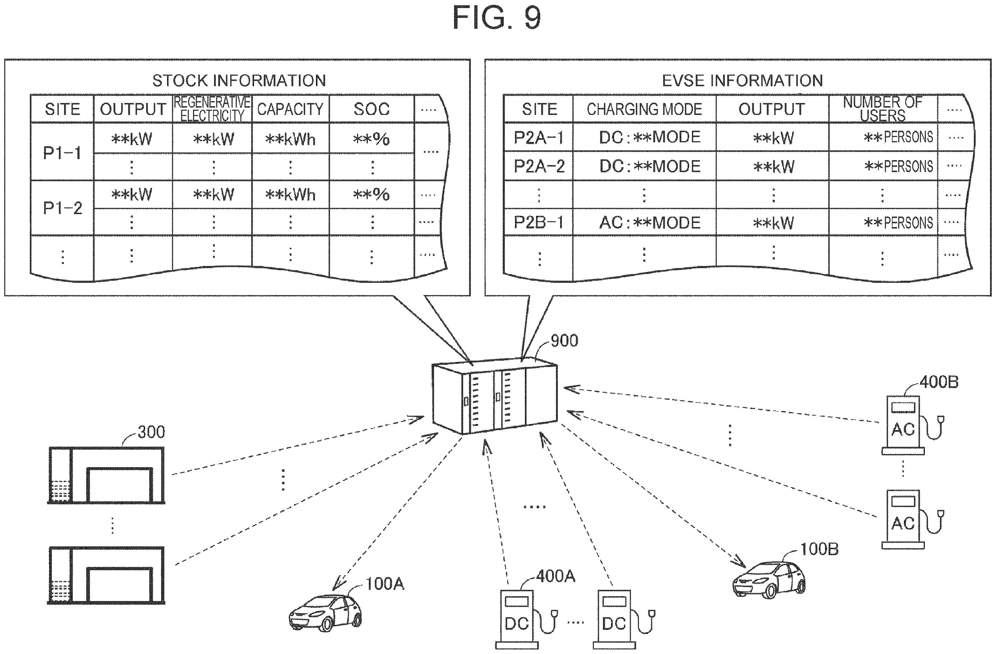

The navigation system 500 may be configured to be able to acquire information (replacement site information) related to a plurality of replacement sites and information (supply site information) related to a plurality of supply sites. FIG. 9 is a diagram for describing an example of the replacement site information and the supply site information.

Referring to FIG. 9, a server 900 stores position information and stock information related to a plurality of replacement sites registered with the server 900. The stock information indicates, with regard to a replacement site associated with the stock information, stock status of battery packs for replacement (battery packs B2) that can be attached to target vehicles in place of battery packs 20 (battery packs B1) currently mounted on the target vehicles. For example, the stock information indicates the number of battery packs for replacement in stock at the associated replacement site, as well as the amount of stored electricity (for example, SOC) and specifications (for example, the maximum output electric power, the maximum regenerated electric power, and the capacity) of each replacement battery pack. The position information and the stock information are stored in a storage device (not shown) of the server 900. For example, based on information from the server 380 (FIG. 3) provided at each replacement site, the server 900 updates the stock information on the associated replacement site. The storage device of the server 900 stores the position information and the stock information related to the plurality of registered replacement sites in a distinguishable manner based on identification information on each replacement site. Such information corresponds to an example of the replacement site information.

Moreover, the server 900 stores position information and EVSE information related to a plurality of supply sites registered with the server 900. The EVSE information indicates, with regard to at least one EVSE (for example, a DC-EVSE 400A and/or an AC-EVSE 400B) installed at a supply site associated with the EVSE information, the number of current users and specifications (for example, the charging mode and the rated output) of each EVSE. The charging mode may be indicated by a charging standard. The position information and the EVSE information are stored in the storage device of the server 900. For example, based on information from each EVSE installed at each supply site, the server 900 updates the EVSE information on the associated supply site. The storage device of the server 900 stores the position information and the EVSE information related to the plurality of registered supply sites in a distinguishable manner based on identification information on each supply site. Such information corresponds to an example of the supply site information.

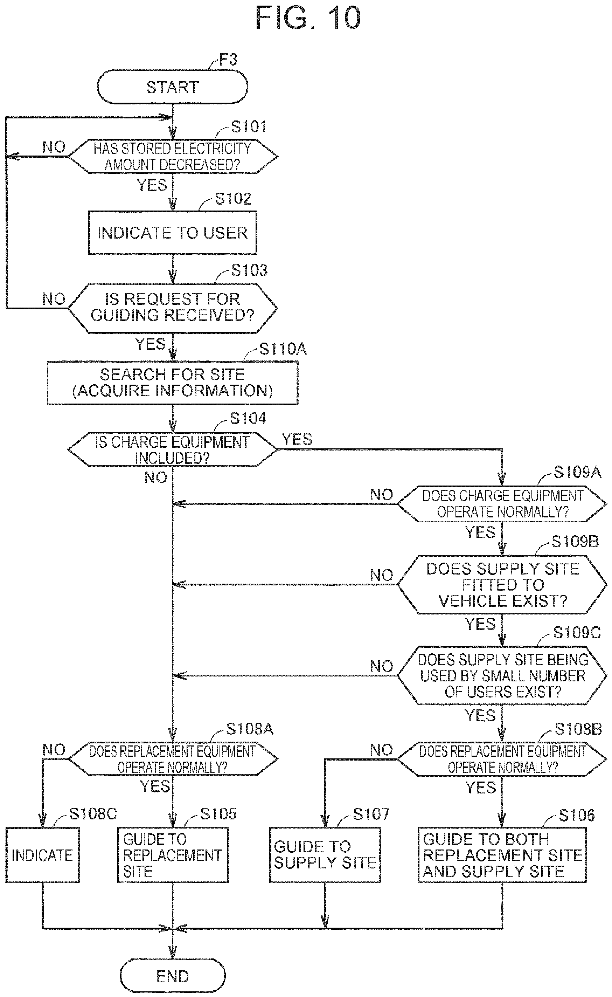

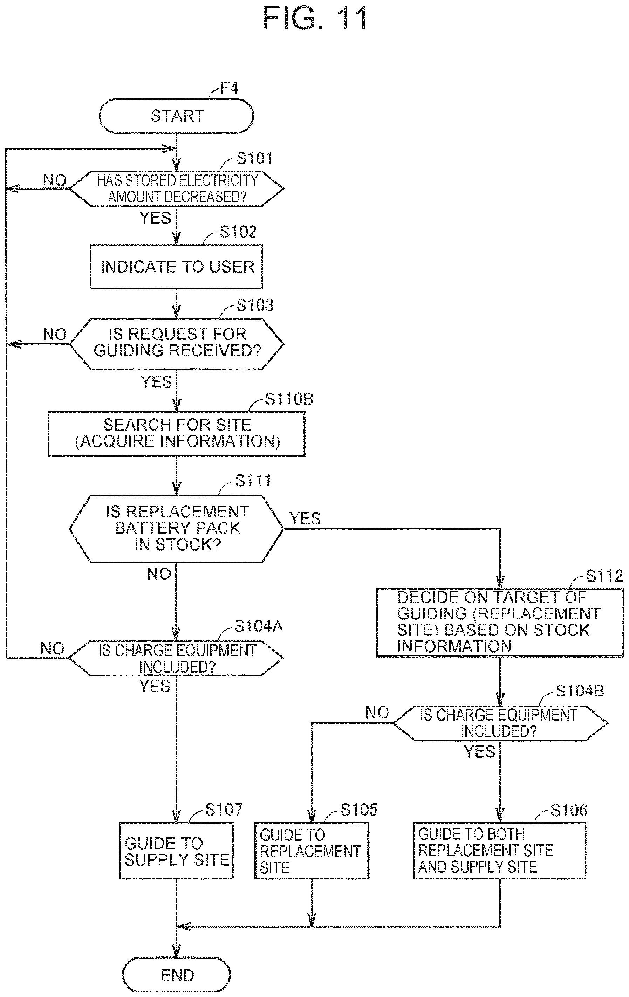

The navigation system 500 mounted in the target vehicle (vehicle 100A, 100B) is configured to be able to communicate with the server 900. For example, the control device 510 wirelessly communicates with the server 900 via the wireless communication device 560. The control device 510 can acquire the above-described information from the server 900. The control device 510 of the navigation system 500 with such a configuration may perform a process flow F3 shown in FIG. 10 or a process flow F4 shown in FIG. 11, instead of the process flow F1 shown in FIG. 6.

FIG. 10 is a flowchart showing a second modification of the process flow F1 shown in FIG. 6. The process flow F3 is the same as the process flow F2 (FIG. 8), except for the addition of S109A to S109C and S110A.

Referring to FIG. 10, in the present modification, when it is determined that the display 531 receives a request for guiding (YES in S103), the process moves to S110A. In S110A, the control device 510 searches for a replacement site and a supply site existing in a predetermined search area. The search area may be an area around the target vehicle. When no replacement site or supply site is found through the search, the search area may be expanded, and a search may be performed again. Then, with regard to at least one supply site found in the search area through the search, the control device 510 acquires position information and EVSE information. Thereafter, the process moves to S104.

When it is determined in S104 that the target vehicle includes the charge equipment (YES in S104), in S109A to S109C, the control device 510 determines whether or not other requirements related to the condition for guiding are met. In S109A, the control device 510 determines whether or not the charge equipment of the target vehicle operates normally. When at least one of the DC charge equipment (DC charge relay 14a and DC inlet 14b) and the AC charge equipment (AC charger 15a and AC inlet 15b) included in the target vehicle operates normally, the determination in S109A results in YES. In S109B, the control device 510 determines, for example, based on the EVSE information, whether or not there exists a supply site where an EVSE fitted to the target vehicle is provided, in the at least one supply site found through the search. The EVSE fitted to the target vehicle may be an EVSE that satisfies a requirement (for example, a requirement related to charging mode and rated output) preset on the target vehicle. However, when an abnormality occurs in any one of the DC charge equipment and the AC charge equipment included in the target vehicle, it is determined that only an EVSE (DC-EVSE 400A or AC-EVSE 400B) fitted to the normally operating charge equipment is fitted to the target vehicle. In S109C, the control device 510 determines, for example, based on the EVSE information, whether or not there exists a supply site including an EVSE that has a predetermined number of users or fewer, in the at least one supply site found through the search.

In the present modification, the condition for guiding is met when all of the following requirements are met: that the target vehicle includes the charge equipment (first requirement); that the charge equipment of the target vehicle operates normally (second requirement); that there exists in a predetermined area a supply site where an energy supply facility fitted to the target vehicle is provided (third requirement); and that there exists in the predetermined area a supply site including an energy supply facility that has a predetermined number of users or fewer (fourth requirement). When any of the requirements is not met, the condition for guiding is not met. When at least one of the first to fourth requirements is not met (NO in any of S104 and S109A to S109C), the process moves to S108A. When all of the first to fourth requirements are met (YES in all of S104 and S109A to S109C), the process moves to S108B.

When the determination is YES in S108A, the control device 510 decides on a replacement site as a target of guiding, and in subsequent S105, the display 531 displays the screen Nv11 (see FIG. 7). However, in the screen Nv11, the replacement site (target of guiding) found through the search in S110A is displayed. When the determination is NO in S108B, the control device 510 decides on a supply site as a target of guiding, and in subsequent S107, the display 531 displays the screen Nv13 (see FIG. 8). However, in the screen Nv13, the supply site (target of guiding) that satisfies the third requirement and the fourth requirement is displayed. When the determination is YES in S108B, the control device 510 decides on a supply site and a replacement site as targets of guiding, and in subsequent S106, the display 531 displays the screen Nv12 (see FIG. 7). However, in the screen Nv12, the supply site (target of guiding) that satisfies the third requirement and the fourth requirement and the replacement site (target of guiding) found through the search in S110A are displayed.

In the modification shown in FIG. 10, the condition for guiding includes the first to fourth requirements. However, the condition for guiding is not limited thereto and can be changed as appropriate. For example, at least one of the second to fourth requirements may be omitted. The third requirement and the fourth requirement may be omitted. The condition for guiding may include only one requirement selected from among the second to fourth requirements, in addition to the first requirement.

FIG. 11 is a flowchart showing a third modification of the process flow F1 shown in FIG. 6. The process flow F4 is the same as the process flow F1 (FIG. 6), except for the adoption of S104A, S104B in place of S104, and the addition of S107, S110B, S111, S112.

Referring to FIG. 11, in the process flow F4, when it is determined that the display 531 receives a request for guiding (YES in S103), the process moves to S110B. In S110B, the control device 510 searches for a replacement site and a supply site existing in a predetermined search area. Then, with regard to at least one replacement site found in the search area through the search, the control device 510 acquires position information and stock information. Thereafter, the process moves to S 111. In the navigation system 500 according to the present modification, the control device 510, the storage device 520, and the indication device 530 cooperate with each other to function as both a guiding device and a search device.

In S111, the control device 510 determines, by using the stock information, whether or not a replacement site including a battery pack for replacement for the target vehicle exists in the at least one replacement site found through the search. When a replacement site including a battery pack for replacement for the target vehicle exists in the search area (YES in S111), in S112, the control device 510 decides on a replacement site as a target of guiding by using the stock information. Specifically, the control device 510 selects a replacement site including a battery pack for replacement that satisfies a predetermined requirement, as a target of guiding, from the at least one replacement site (candidate for the target of guiding) including a battery pack for replacement for the target vehicle. The predetermined requirement is set with regard to at least one of the amounts of stored electricity, the maximum output electric power, the maximum regenerated electric power, and the capacity of a battery pack (electrical storage device) for replacement. For example, the predetermined requirement may include at least one of the following facts with regard to a battery pack for replacement: that the amount of stored electricity (for example, SOC) is a predetermined first reference value or more; that the maximum output electric power is a predetermined second reference value or more; that the maximum regenerated electric power is a predetermined third reference value or more; and that the capacity (the amount of electricity in a fully charged state) is a predetermined fourth reference value or more.

After a replacement site to be a target of guiding is decided in S112, the process moves to S104B. When a replacement site including a battery pack for replacement for the target vehicle does not exist in the search area (NO in S111), the process moves to S104A. In S104A, S104B, the control device 510 determines whether or not the target vehicle includes the charge equipment.

When the determination is YES in S104A, the control device 510 decides on a supply site as a target of guiding, and in subsequent S107, the display 531 displays the screen Nv13 (see FIG. 8). However, in the screen Nv13, the supply site (target of guiding) found through the search in S110B is displayed. When the determination is NO in S104B, the control device 510 decides on a replacement site as a target of guiding, and in subsequent S105, the display 531 displays the screen Nv11 (see FIG. 7). However, in the screen Nv11, the replacement site (target of guiding) decided in S112 is displayed. When the determination is YES in S104B, the control device 510 decides on a supply site and a replacement site as targets of guiding, and in subsequent S106, the display 531 displays the screen Nv12 (see FIG. 7). However, in the screen Nv12, the supply site (target of guiding) found through the search in S110B and the replacement site (target of guiding) decided in S112 are displayed.

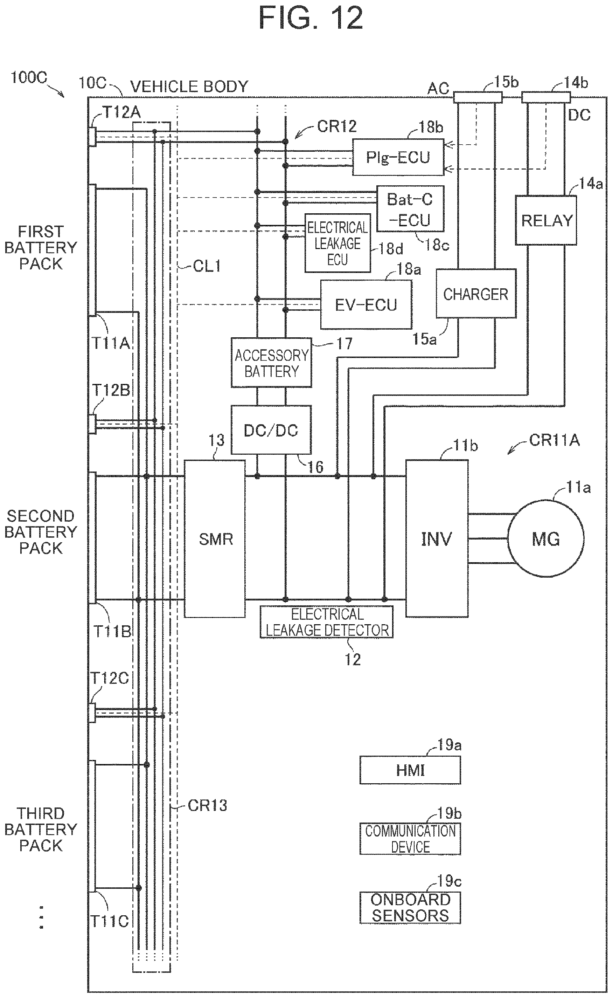

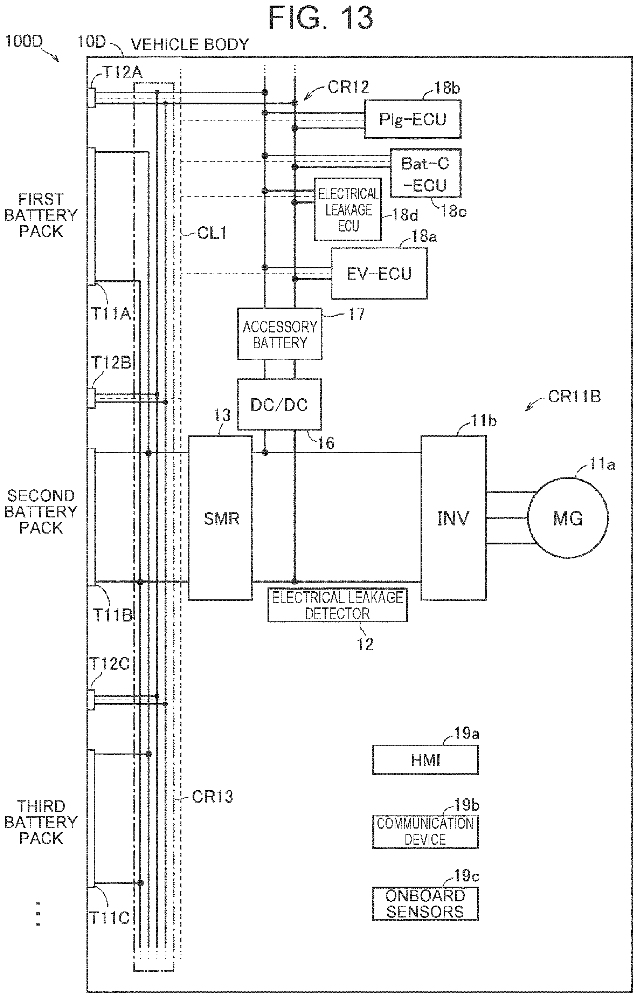

The target vehicle may include a plurality of battery packs (electrical storage devices). A vehicle 100C shown in FIG. 12 and a vehicle 100D shown in FIG. 13 may be adopted as target vehicles, instead of the vehicle 100A (FIG. 1) and the vehicle 100B (FIG. 2), respectively. FIG. 12 shows a modification of the vehicle 100A shown in FIG. 1. FIG. 13 shows a modification of the vehicle 100B shown in FIG. 2.

Referring to FIG. 12, the vehicle 100C includes a plurality of battery packs and a vehicle body 10C. In the example shown in FIG. 12, the vehicle 100C includes at least three battery packs (first to third battery packs). The number of battery packs may be three or more and less than 10. However, the number of battery packs is not limited thereto and may be two, or 10 or more. The vehicle body 10C includes terminals T11A, T12A to and from which the first battery pack is attachable and detachable, terminals T11B, T12B to and from which the second battery pack is attachable and detachable, and terminals T11C, T12C to and from which the third battery pack is attachable and detachable. The vehicle body 10C is configured to allow the at least first to third battery packs to be attached thereto and detached therefrom. Moreover, the vehicle body 10C includes a parallel circuit CR13. The parallel circuit CR13 connects the terminals T11A, T11B, T11C (high-voltage power supply line) in parallel, and also connects the terminals T12A, T12B, T12C (low-voltage power supply line) in parallel. The parallel circuit CR13 connects in parallel the plurality of battery packs (including the first to third battery packs) that is connected to the vehicle body 10C. However, the aspect of connecting the plurality of battery packs can be changed as appropriate, and a series connection may be possible.

Referring to FIG. 13, the vehicle 100D includes a plurality of battery packs and a vehicle body 10D. The vehicle 100D has the configuration of the vehicle 100C shown in FIG. 12 from which the DC charge relay 14a, the DC inlet 14b, the AC charger 15a, and the AC inlet 15b are removed. The parallel circuit CR13 included in the vehicle body 10D connects in parallel the plurality of battery packs (including first to third battery packs) that is connected to the vehicle body 10D.

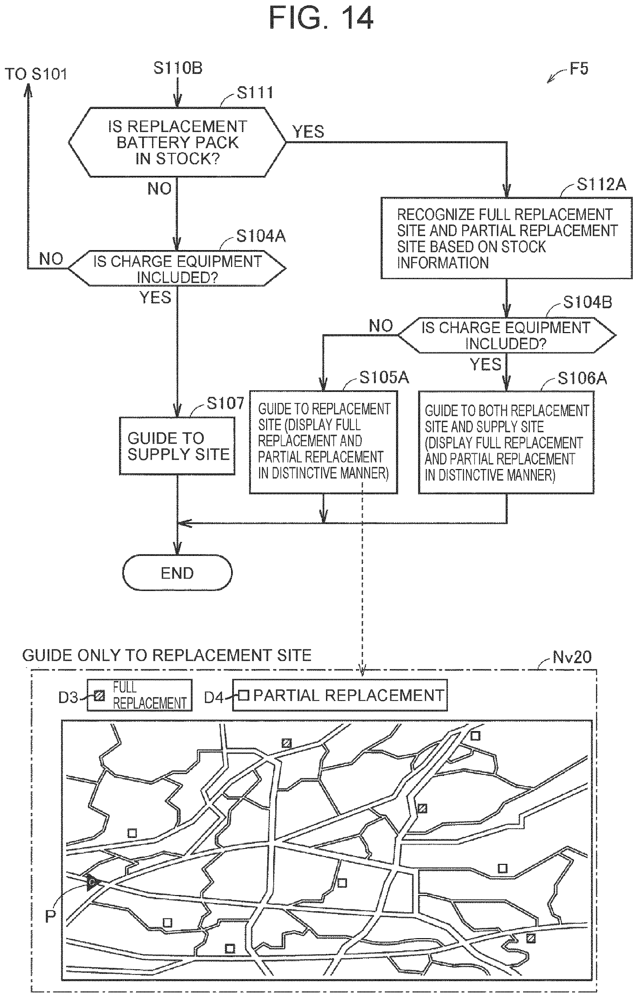

Each of the vehicles 100C and 100D includes the navigation system 500 having the configuration shown in FIG. 6. However, the navigation system 500 mounted in each of the vehicles 100C and 100D performs, for example, a process flow F5 shown in FIG. 14, instead of the process flow F1 shown in FIG. 6. In the description related to the present modification, a vehicle (vehicle 100C or 100D) including the navigation system 500 that performs the process flow F5 is referred to as "target vehicle".

FIG. 14 is a flowchart showing a fourth modification of the process flow F1 shown in FIG. 6. The process flow F5 is the same as the process flow F4 (FIG. 11), except for the adoption of S112A, S105A, S106A in place of S112, S105, S106. In FIG. 14, steps in and before S110B are omitted.

Referring to FIG. 14, in the present modification, when it is determined that a replacement site including a battery pack for replacement for the target vehicle exists in a search area (YES in S111), in S112A, the control device 510 performs replacement site classification by using the stock information. Specifically, the control device 510 classifies each of the at least one replacement site (more specifically, the replacement site including a battery pack for replacement for the target vehicle) existing in the search area, as either a full replacement site or a partial replacement site. The full replacement site is a replacement site (first replacement site) with stock status that allows all of the plurality of battery packs included in the target vehicle to be replaced. In other words, at the full replacement site, all battery packs of the target vehicle can be replaced. The partial replacement site is a replacement site (second replacement site) with stock status that allows only one or some of the plurality of battery packs included in the target vehicle to be replaced. In other words, at the partial replacement site, one or some battery packs of the target vehicle cannot be replaced.

Subsequently, in S104B, the control device 510 determines whether or not the target vehicle includes the charge equipment. When the determination is NO in S104B, in subsequent S105A, the control device 510 decides on, as a target of guiding, at least one of the full replacement site and the partial replacement site recognized in S112A and guides the target vehicle to the target of guiding. When the targets of guiding include both a full replacement site and a partial replacement site, the display 531 displays the full replacement site and the partial replacement site in a form that allows the user to distinguish between the full replacement site and the partial replacement site, in accordance with a control instruction from the control device 510. Specifically, the display 531 displays, for example, a screen Nv20. The screen Nv20 displays full replacement sites and partial replacement sites on a map, for example, in such a manner that the sites are differentiated by using images D3, D4 having different patterns. When the determination is YES in S104B, in subsequent S106A, the control device 510 decides on, as targets of guiding, the supply site found through the search in S110B and at least one of the full replacement site and the partial replacement site recognized in S112A, and guides the target vehicle to the targets of guiding. When the targets of guiding includes both a full replacement site and a partial replacement site, the display 531 displays the full replacement site and the partial replacement site in a form that allows the user to distinguish between the full replacement site and the partial replacement site, in accordance with a control instruction from the control device 510. For example, the display 531 displays a screen (not shown) that is the screen Nv20 to which the image D2 (FIG. 7) indicating a supply site (target of guiding) on the map is added.

The process flows shown in FIGS. 6, 8, 10, 11, and 14 can be changed as appropriate. For example, order of the processes may be changed according to a purpose, or an unnecessary step may be omitted. The content of any process may be changed. For example, in the process flow F5 shown in FIG. 14, the control device 510 recognizes a full replacement site and a partial replacement site in S112A, and the display 531 displays the full replacement site and the partial replacement site in a distinguishable manner in each of S105A, S106A. However, the process flow F5 is not limited thereto and may be changed in such a manner that the control device 510 recognizes a replacement site including a high-grade battery pack in stock in S112A, and that the display 531 displays the replacement site including a high-grade battery pack in stock and a replacement site including only a low-grade battery pack in stock in a distinguishable manner in each of S105A, S106A. Moreover, in the process flow F1 (FIG. 6), when the input device (for example, the display 531 or the input device 540) of the navigation system 500 receives a request for guiding (YES in S103), the control device 510 decides on a target of guiding including at least one of a replacement site and a supply site and guides the target vehicle to the decided target of guiding. However, it is not essential that the navigation system 500 receive a request for guiding from a user.

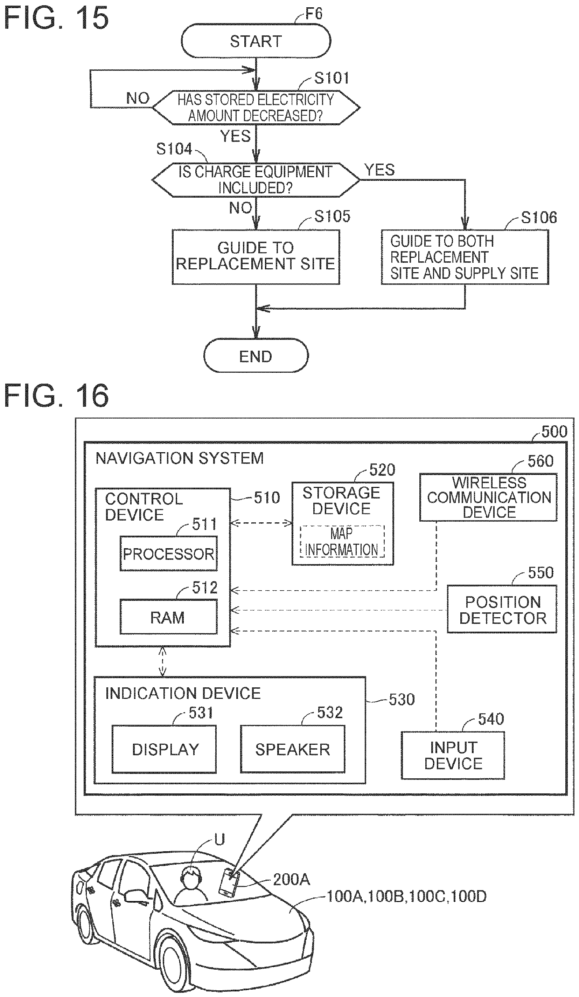

FIG. 15 is a flowchart showing a fifth modification of the process flow F1 shown in FIG. 6. Referring to FIG. 15, a process flow F6 is the process flow F1 (FIG. 6) from which S102 and S103 are omitted. In the process flow F6, when the amount of stored electricity (amount of stored energy) in the battery pack 20 mounted on the target vehicle becomes less than a reference value (YES in S101), the control device 510 decides on a target of guiding including at least one of a replacement site and a supply site and guides the target vehicle to the decided target of guiding.

In the embodiment and each modification, the navigation system 500 is mounted in the target vehicle. However, the configuration is not limited thereto, and at least part of the functionality of the navigation system 500 may be implemented on the cloud by using cloud computing. The navigation system 500 may be mounted in a mobile terminal in place of, or in addition to, the target vehicle. FIG. 16 shows a mobile terminal 200A in which the navigation system 500 is mounted. In the navigation system 500 mounted in the mobile terminal 200A, the display 531 may display information to the user U of the target vehicle (for example, a vehicle 100A, 100B, 100C, or 100D). Each of the display 531 (for example, a touch-panel display) and the input device 540 may receive a request (for example, a request for guiding) from the user U.

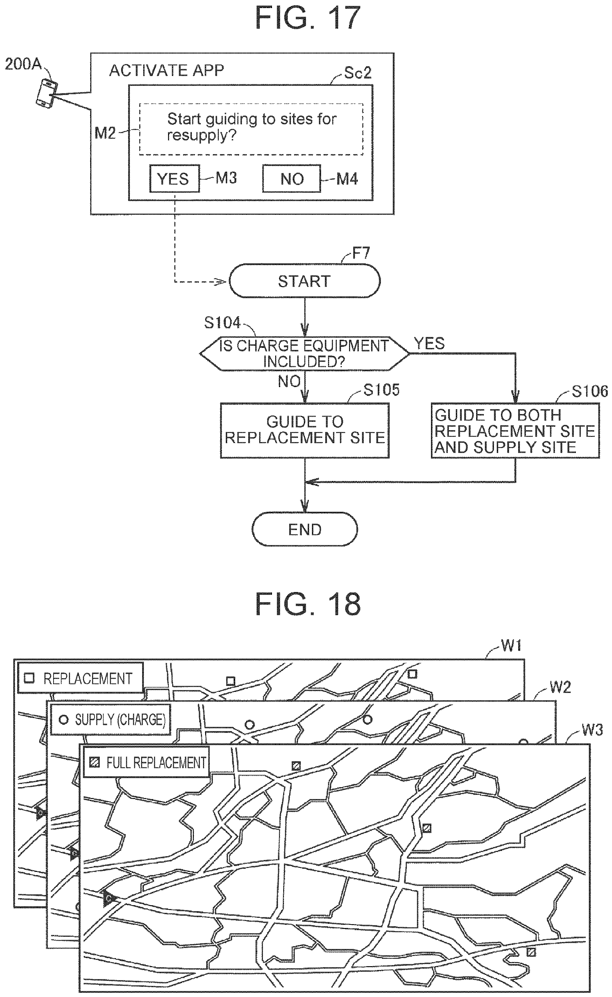

The navigation system 500 mounted in the mobile terminal 200A may perform a process flow F7 shown in FIG. 17, instead of the process flow F1 shown in FIG. 6. FIG. 17 is a flowchart showing a sixth modification of the process flow F1 shown in FIG. 6. Referring to FIG. 17, when application software installed in the mobile terminal 200A is activated, the display 531 of the mobile terminal 200A displays, for example, a screen Sc2. The screen Sc2 is the screen Sc1 (FIG. 6) from which the message M1 is omitted. When the operation portion M3 in the screen Sc2 is operated by the user, the control device 510 of the mobile terminal 200A starts the process flow F7. The process flow F7 is the process flow F1 (FIG. 6) from which S101 to S103 are omitted. Accordingly, also in the process flow F7 as in the process flow F1, the control device 510 decides on a target of guiding including at least one of a replacement site and a supply site and guides the target vehicle to the decided target of guiding.

In the screen Nv12 (FIG. 7), replacement sites and supply sites are displayed in a distinguishable manner on the same map. In the screen Nv20 (FIG. 14), full replacement sites and partial replacement sites are displayed in a distinguishable manner on the same map. However, the aspect of displaying each site is not limited thereto and can be changed as appropriate. FIG. 18 shows a modification of the aspect of displaying replacement sites and supply sites. Referring to FIG. 18, the control device 510 may cause the display 531 to display windows W1 to W3, for example, in S106A in FIG. 14. In each of the windows W1 to W3, a map of the same place is displayed. However, only replacement sites (full replacement sites and partial replacement sites) are displayed on the map in the window W1, only supply sites are displayed on the map in the window W2, and only the full replacement sites are displayed on the map in the window W3. Although FIG. 18 shows a state in which the window W3 is arranged on the front and the windows W1 and W2 are hidden behind the window W3, the user can arbitrarily choose which window is arranged on the front. For example, a window (any one of the windows W1 to W3) chosen by the user via a graphical user interface (GUI) of the display 531 may be configured to be arranged on the front.

Although each type of site is differentiated by changing the shape or pattern of a mark displayed on a map in the embodiment or each modification, the method of differentiating each site can be changed as appropriate. For example, the color or size of a mark may be changed according to the type of site. Moreover, a specific site may be displayed in an emphasized manner (for example, in such a manner as to be more prominent than the other sites). Marks displayed on a map are not limited to shapes such as circles or squares, and may be numbers, characters, symbols, icons, or combinations thereof. The display 531 may present information related to each site to a user in a form that can be intuitively understood (for example, in a form of three-dimensional VR video) by using XR technology.

The configurations of the vehicle body and the battery pack shown in FIGS. 1, 2, 12, and 13 can be changed as appropriate. For example, at least one of the SMRs 13, 23 may be omitted. For example, the SMR 13 may be omitted. Alternatively, the SMR 23 may be omitted. At least one of the DC inlet 14b and the AC inlet 15b may be omitted, or may be changed to a single AC-DC common inlet. The position of each inlet is arbitrary. An inlet may be provided on any one of the front, rear, right, left, top, and bottom faces of the vehicle body. The vehicle body may be configured to be capable of non-contact charging. The vehicle body may include a solar panel. The battery pack may include a power supply for activating the control device (ECU 28a) in the battery pack. The circuit CR22 in the battery pack may further include a temperature adjustment device that is driven by electricity from the accessory battery 17. The electrical storage device is not limited to a battery pack and may have a packless structure.

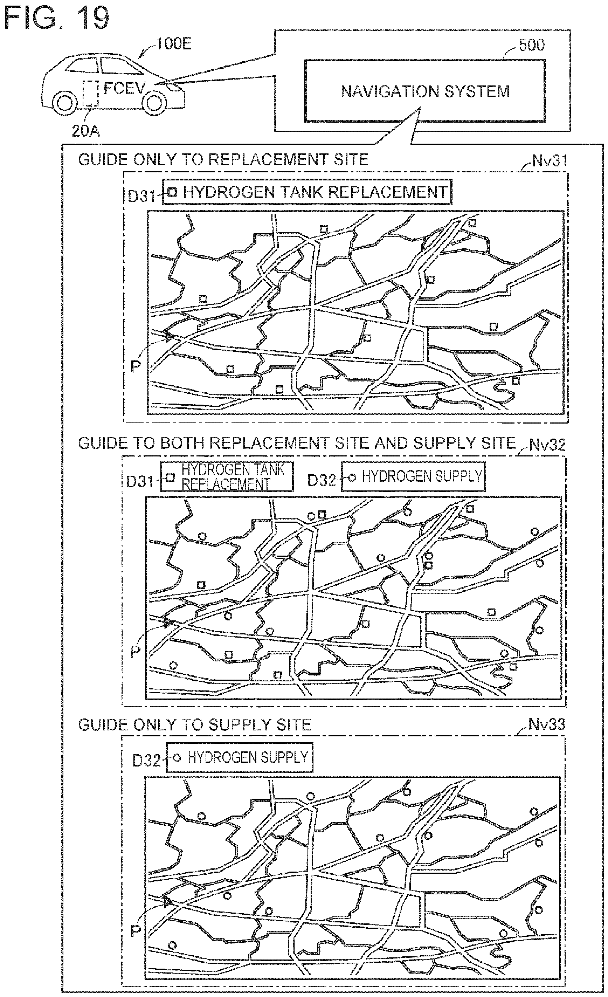

The energy storage device is not limited to an electrical storage device. The vehicle may be a fuel cell electric vehicle (FCEV), and the attachable and detachable energy storage device may be a hydrogen tank of the FCEV. FIG. 19 shows a fuel cell electric vehicle including the navigation system 500. Referring to FIG. 19, an FCEV 100E includes a hydrogen tank 20A and is configured to be able to travel by using hydrogen stored in the hydrogen tank 20A. The navigation system 500 mounted in the FCEV 100E has the configuration shown in FIG. 6. The display 531 may display a screen Nv31, a screen Nv32, and a screen Nv33, in place of the screen Nv11 (FIG. 7), the screen Nv12 (FIG. 7), and the screen Nv13 (FIG. 8), respectively. In each of the screens Nv31, Nv32, each replacement site indicated by an image D31 on a map is a site where a replacement apparatus is provided that is configured to detach the hydrogen tank 20A from the FCEV 100E and attach another hydrogen tank to the FCEV 100E. In each of the screens Nv32, Nv33, each supply site indicated by an image D32 on the map is a site (for example, a hydrogen station) where an energy supply facility is provided that supplies hydrogen (energy) to the hydrogen tank 20A.

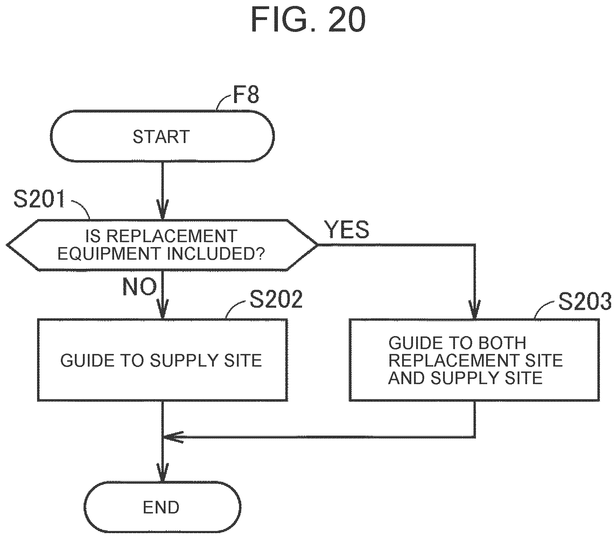

In a vehicle, the replacement equipment may be optional. For example, a navigation system mounted in a vehicle that includes the charge equipment as standard equipment may perform a process flow F8 shown in FIG. 20, instead of the process flow F1 shown in FIG. 6. FIG. 20 is a flowchart showing a seventh modification of the process flow shown in FIG. 6. Referring to FIG. 20, in S201, the navigation system determines whether or not the target vehicle includes the replacement equipment (optional equipment). When it is determined that the target vehicle does not include the replacement equipment (NO in S201), in S202, the navigation system controls an indication device in such a manner that the third guiding is performed. Specifically, the navigation system guides the target vehicle to a supply site and does not guide the target vehicle to a replacement site. When it is determined that the target vehicle includes the replacement equipment (YES in S201), in S203, the navigation system controls the indication device in such a manner that the second guiding is performed. Specifically, the navigation system guides the target vehicle to both a replacement site and a supply site. Note that in S203, a change may be made such that the first guiding is performed instead of the second guiding. A step of determining whether or not the replacement equipment operates normally may be adopted in place of, or in addition to, S201.

The vehicle is not limited to a passenger car and may be a bus, a truck, or a work vehicle (a tractor, a forklift, or the like). The vehicle may be configured to be able to perform driverless driving through autonomous driving or remote driving. The vehicle may be an automatic guided vehicle (AGV).

The various modifications may be implemented in an arbitrary combination.

The embodiment disclosed herein should be construed as illustrative and not as restrictive in all aspects. The scope of the present invention is indicated not by the description of the embodiment but by claims, and is intended to include all changes made within the scope of claims, as well as equivalent meanings and scopes.

## Claims

1. A navigation system (500) configured to guide a vehicle including an energy storage device (20) which is attachable and detachable, the navigation system (500) comprising a guiding device (510, 520, 530) configured to present information for guiding the vehicle to at least one of a replacement site (P1-1, P1-2, P1-3, P1-4, P1-5) and a supply site (P2A-1, P2A-2, P2B-1, P2B-2, P2B-3), wherein:
the replacement site (P1-1, P1-2, P1-3, P1-4, P1-5) is a site where the energy storage device is replaced;
the supply site (P2A-1, P2A-2, P2B-1, P2B-2, P2B-3) is a site where an energy supply facility is provided, the energy supply facility supplying energy to the energy storage device; and
the guiding device (510, 520, 530) is configured to guide the vehicle to the supply site (P2A-1, P2A-2, P2B-1, P2B-2, P2B-3) when a predetermined condition is met, and to not guide the vehicle to the supply site (P2A-1, P2A-2, P2B-1, P2B-2, P2B-3) when the predetermined condition is not met.

2. The navigation system (500) according to claim 1, wherein:
the guiding device (510, 520, 530) is configured to determine whether or not the vehicle includes first equipment for allowing an energy supply from the energy supply facility to the energy storage device; and
the predetermined condition includes a fact that the vehicle includes the first equipment.

3. The navigation system (500) according to claim 2, wherein:
the guiding device (510, 520, 530) is configured to present first information when the predetermined condition is not met, the first information guiding the vehicle to the replacement site (P1-1, P1-2, P1-3, P1-4, P1-5) and not guiding the vehicle to the supply site (P2A-1, P2A-2, P2B-1, P2B-2, P2B-3); and
the guiding device (510, 520, 530) is configured to present any one of second information and third information when the predetermined condition is met, the second information guiding the vehicle to both the replacement site (P1-1, P1-2, P1-3, P1-4, P1-5) and the supply site (P2A-1, P2A-2, P2B-1, P2B-2, P2B-3), the third information guiding the vehicle to the supply site (P2A-1, P2A-2, P2B-1, P2B-2, P2B-3) and not guiding the vehicle to the replacement site (P1-1, P1-2, P1-3, P1-4, P1-5).

4. The navigation system (500) according to claim 3, wherein:
the guiding device (510, 520, 530) is configured to determine whether or not an abnormality has occurred in second equipment for allowing the energy storage device to be attached to and detached from the vehicle; and
the guiding device (510, 520, 530) is configured to present the third information when it is determined that the vehicle includes the first equipment and that an abnormality has occurred in the second equipment.

5. The navigation system (500) according to claim 3, further comprising a search device configured to search for the replacement site (P1-1, P1-2, P1-3, P1-4, P1-5) existing in a predetermined area, wherein:
with regard to the replacement site (P1-1, P1-2, P1-3, P1-4, P1-5) found in the predetermined area through the search, the guiding device (510, 520, 530) is configured to acquire stock information indicating stock status of an energy storage device for replacement that is available to be attached to the vehicle in place of the energy storage device, and configured to determine, by using the stock information, whether or not the replacement site (P1-1, P1-2, P1-3, P1-4, P1-5) has the energy storage device for replacement in stock; and
the guiding device (510, 520, 530) is configured to present the third information when it is determined that the vehicle includes the first equipment and that the replacement site (P1-1, P1-2, P1-3, P1-4, P1-5) including the energy storage device for replacement in stock does not exist in the predetermined area.

6. The navigation system (500) according to claim 5, wherein:
each of the energy storage device and the energy storage device for replacement is an electrical storage device configured to be attachable and detachable by a replacement apparatus;
the replacement site (P1-1, P1-2, P1-3, P1-4, P1-5) is a site where the replacement apparatus is provided;
when it is determined that the replacement site (P1-1, P1-2, P1-3, P1-4, P1-5) including the energy storage device for replacement in stock exists in the predetermined area, the guiding device (510, 520, 530) is configured to decide on, by using the stock information, the replacement site (P1-1, P1-2, P1-3, P1-4, P1-5) including the energy storage device for replacement that satisfies a predetermined requirement, as a target of guiding; and
the predetermined requirement is set with regard to at least one of stored electricity amount, maximum output electric power, maximum regenerated electric power, and capacity of the electrical storage device.

7. The navigation system (500) according to any one of claims 3 to 6, wherein:
the guiding device (510, 520, 530) includes a display device configured to display information to a user of the vehicle;
presenting the first information is that the display device displays the replacement site (P1-1, P1-2, P1-3, P1-4, P1-5) and does not display the supply site (P2A-1, P2A-2, P2B-1, P2B-2, P2B-3) on a map, or that the display device displays the replacement site (P1-1, P1-2, P1-3, P1-4, P1-5) and the supply site (P2A-1, P2A-2, P2B-1, P2B-2, P2B-3) on the map, each in a distinguishable form, in order to guide the vehicle driven by the user;
presenting the second information is that the display device displays the replacement site (P1-1, P1-2, P1-3, P1-4, P1-5) and the supply site (P2A-1, P2A-2, P2B-1, P2B-2, P2B-3) on a map, or that the display device displays the replacement site (P1-1, P1-2, P1-3, P1-4, P1-5) and the supply site (P2A-1, P2A-2, P2B-1, P2B-2, P2B-3) on the map, each in a distinguishable form, in order to guide the vehicle driven by the user; and
presenting the third information is that the display device displays the supply site (P2A-1, P2A-2, P2B-1, P2B-2, P2B-3) and does not display the replacement site (P1-1, P1-2, P1-3, P1-4, P1-5) on a map, or that the display device displays the replacement site (P1-1, P1-2, P1-3, P1-4, P1-5) and the supply site (P2A-1, P2A-2, P2B-1, P2B-2, P2B-3) on the map, each in a distinguishable form, in order to guide the vehicle driven by the user.

8. The navigation system (500) according to claim 7, wherein the guiding device (510, 520, 530) further includes a speaker, in addition to the display device.

9. The navigation system (500) according to claim 1, **characterized in that**:
the guiding device (510, 520, 530) is configured to decide on a target of guiding including at least one of the replacement site (P1-1, P1-2, P1-3, P1-4, P1-5) and the supply site (P2A-1, P2A-2, P2B-1, P2B-2, P2B-3) when a stored energy amount in the energy storage device mounted on the vehicle becomes less than a reference value; and
the guiding device (510, 520, 530) is configured to guide the vehicle to the target of guiding.

10. The navigation system (500) according to claim 1, further comprising an input device configured to receive a request for guiding from a user, wherein:
the guiding device (510, 520, 530) is configured to decide on a target of guiding including at least one of the replacement site (P1-1, P1-2, P1-3, P1-4, P1-5) and the supply site (P2A-1, P2A-2, P2B-1, P2B-2, P2B-3) when the input device receives the request for guiding; and
the guiding device (510, 520, 530) is configured to guide the vehicle to the target of guiding.

11. The navigation system (500) according to claim 1, further comprising a search device configured to search for the replacement site (P1-1, P1-2, P1-3, P1-4, P1-5) existing in a predetermined area, wherein:
when at least one replacement site (P1-1, P1-2, P1-3, P1-4, P1-5) is to be a target of guiding, the guiding device (510, 520, 530) is configured to acquire stock information with regard to each candidate for the target of guiding found in the predetermined area through the search, the stock information indicating stock status of an energy storage device for replacement that is available to be attached to the vehicle in place of the energy storage device; and
the guiding device (510, 520, 530) is configured to decide on the target of guiding by using the stock information, and to guide the vehicle to the target of guiding.

12. The navigation system (500) according to claim 10, wherein:
the guiding device (510, 520, 530) includes a display device and a control device, the display device being configured to display information to a user of the vehicle, the control device being configured to control the display device;
when the vehicle includes a plurality of the energy storage devices, the control device is configured to classify the target of guiding as any one of a first replacement site and a second replacement site, the first replacement site having stock status that allows all of the plurality of energy storage devices included in the vehicle to be replaced, the second replacement site having stock status that allows only one or some of the plurality of energy storage devices included in the vehicle to be replaced; and
the display device is configured to display the first replacement site and the second replacement site in a form that allows the user to distinguish between the first replacement site and the second replacement site.

13. A vehicle comprising:
a navigation system (500) configured to guide the vehicle; and
an electrical storage device as an energy storage device which is attachable and detachable, wherein
the vehicle is configured to be able to travel by using electricity output from the electrical storage device,
the navigation system (500) includes a guiding device (510, 520, 530) configured to present information for guiding the vehicle to at least one of a replacement site (P1-1, P1-2, P1-3, P1-4, P1-5) and a supply site (P2A-1, P2A-2, P2B-1, P2B-2, P2B-3),
the replacement site (P1-1, P1-2, P1-3, P1-4, P1-5) is a site where the energy storage device is replaced,
the supply site (P2A-1, P2A-2, P2B-1, P2B-2, P2B-3) is a site where an energy supply facility is provided, the energy supply facility supplying energy to the energy storage device, and
the guiding device (510, 520, 530) is configured to guide the vehicle to the supply site (P2A-1, P2A-2, P2B-1, P2B-2, P2B-3) when a predetermined condition is met, and to not guide the vehicle to the supply site (P2A-1, P2A-2, P2B-1, P2B-2, P2B-3) when the predetermined condition is not met.

14. A navigation system (500) configured to guide a vehicle including an energy storage device, the navigation system (500) comprising a guiding device (510, 520, 530) configured to present information for guiding the vehicle to at least one of a replacement site (P1-1, P1-2, P1-3, P1-4, P1-5) and a supply site (P2A-1, P2A-2, P2B-1, P2B-2, P2B-3), wherein:
the replacement site (P1-1, P1-2, P1-3, P1-4, P1-5) is a site where the energy storage device is replaced;
the supply site (P2A-1, P2A-2, P2B-1, P2B-2, P2B-3) is a site where an energy supply facility is provided, the energy supply facility supplying energy to the energy storage device; and
the guiding device (510, 520, 530) is configured to guide the vehicle to the replacement site (P1-1, P1-2, P1-3, P1-4, P1-5) when a predetermined condition is met, and to not guide the vehicle to the replacement site (P1-1, P1-2, P1-3, P1-4, P1-5) when the predetermined condition is not met.

15. A vehicle comprising:
a navigation system (500) configured to guide the vehicle; and
an electrical storage device as an energy storage device, wherein
the vehicle is configured to be able to travel by using electricity output from the electrical storage device,
the navigation system (500) includes a guiding device (510, 520, 530) configured to present information for guiding the vehicle to at least one of a replacement site (P1-1, P1-2, P1-3, P1-4, P1-5) and a supply site (P2A-1, P2A-2, P2B-1, P2B-2, P2B-3),
the replacement site (P1-1, P1-2, P1-3, P1-4, P1-5) is a site where the energy storage device is replaced,
the supply site (P2A-1, P2A-2, P2B-1, P2B-2, P2B-3) is a site where an energy supply facility is provided, the energy supply facility supplying energy to the energy storage device, and
the guiding device (510, 520, 530) is configured to guide the vehicle to the replacement site (P1-1, P1-2, P1-3, P1-4, P1-5) when a predetermined condition is met, and to not guide the vehicle to the replacement site (P1-1, P1-2, P1-3, P1-4, P1-5) when the predetermined condition is not met.
